# EUROPÄISCHE PATENTSCHRIFT

(11) **EP 4 430 576 B1**
(45) Veröffentlichungstag und Bekanntmachung des Hinweises auf die Patenterteilung: **27.05.2026**
(21) Anmeldenummer: 22813617.2
(22) Anmeldetag: 09.11.2022
(51) Int. Cl.: G06T 19/20

(54) **VERFAHREN UND SYSTEM ZUR VIRTUELLEN VORAUSSAGE EINES REALEN SITZES EINES REALEN BRILLENGESTELLS AM KOPF EINER PERSON MIT INDIVIDUELLER KOPFGEOMETRIE**
METHOD AND SYSTEM FOR MAKING A VIRTUAL PREDICTION ABOUT A REAL FIT OF A REAL SPECTACLE FRAME ON THE HEAD OF A PERSON WITH AN INDIVIDUAL HEAD GEOMETRY
PROCÉDÉ ET SYSTÈME DE PRÉDICTION VIRTUELLE D'UNE ADAPTATION RÉELLE D'UNE MONTURE DE LUNETTES RÉELLE SUR LA TÊTE D'UNE PERSONNE AYANT UNE FORME DE TÊTE INDIVIDUELLE

(30) Priorität: 09.11.2021 DE 102021129171
(43) Veröffentlichungstag der Anmeldung: 18.09.2024
(73) Patentinhaber: You Mawo GmbH, 78467 Konstanz (DE)
(72) Erfinder: MIKO, Daniel Ferenc, 79539 Lörrach (DE); BIDMON, Dominik, 78467 Konstanz (DE)
(74) Vertreter: Platzöder Patentanwaltsgesellschaft mbH
(86) Internationale Anmeldenummer: PCT/EP2022/081273
(87) Internationale Veröffentlichungsnummer: WO 2023/083867

(56) Entgegenhaltungen:
- EP-A1- 3 410 178
- US-A1- 2020 335 204
- US-A1- 2021 049 830
- US-A1- 2021 065 285
- US-B2- 9 286 715

## Beschreibung

Die vorliegende Erfindung liegt auf dem Gebiet der Brillentechnologie und betrifft ein Verfahren, ein System sowie ein Computerprogramm zur virtuellen Voraussage eines realen Sitzes eines realen Brillengestells bestimmter Gestellgeometrie am Kopf einer Person mit individueller Kopfgeometrie. Die Erfindung kann insbesondere im Rahmen einer virtuellen Anprobe, nachfolgend auch als "VTO" abgekürzt (von engl. "Virtual Tryon") verwendet werden.

Ein Ziel einer solchen VTO kann es insbesondere sein, in einem Szenario, bei dem ein Brillengestell noch nicht existiert oder jedenfalls beim späteren Brillenträger (nachfolgend auch als "Person" bezeichnet) noch nicht physisch vorliegt, der Person eine plausible Voransicht des Brillengestells und vor allem seines Sitzes am Kopf der Person mittels einer virtuellen Entsprechung des Brillengestells (3D Modell) einerseits und des Kopfes der Person (oder eines Teils des Kopfes) zu geben. Eine solche Voransicht kann insbesondere als Video, Bild oder gar 3D Modell ausgestaltet sein.

Im Stand der Technik sind im Wesentlichen drei unterschiedliche Verfahren zum Zweck des VTO bekannt, die sich zunächst in der visuellen Darstellung unterscheiden:
Zum Ersten gibt es AR -basierte Systeme (AR = Augmented Reality), bei denen ein 3D-Produkt in Echtzeit in einen Live-Videostream einer Smartphone-Kamera oder Webkamera retuschiert wird. Eine solche Vorschau wirkt in der Regel realistisch, da das Gesamtbild zum größten Teil aus dem Video besteht, das die reale Person zeigt, während der synthetische, gerenderte Teil des Bildes, der das Produkt zeigt, oft nur einen kleinen Bildanteil beansprucht.

Zum Zweiten gibt es auch VTO-Varianten, bei denen das gesamte Vorschaubild mit bekannten Techniken der Computergrafik voll synthetisiert/gerendert wird. Dazu muss neben dem 3D-Objekt, das vorangeschaut werden soll, auch die Körperregion der Person (bei einer Brille als Objekt somit der Kopf der Person) zumindest anteilig als 3D-Modell vorliegen. Wie in einem Videospiel besteht die Vorschau dadurch komplett aus virtuellen Objekten. Zum Zweck der Abbildung der Körperregion als 3D-Modell erfolgt vor einer solchen Ansicht üblicherweise ein 3D-Scan der Körperregion. Ist die Körperregion als 3D-Modell digitalisiert, kann dieses gemeinsam mit dem bereits als 3D-Modell vorliegende Produkt dreidimensional im virtuellen Raum arrangiert werden und die sogenannte Rendering-Pipeline einer Echtzeit-Computeranwendung erstellt anschließend ein flüssiges Echtzeitbild, wie in einem Videospiel.

Zum Dritten existieren mittlerweile auch hybride VTO-Systeme, bei denen ein 3D-Modell der Person entweder vor einer AR-Anwendung oder währenddessen erstellt oder generiert wird. Dieses 3D-Modell der Person bzw. einer Körperregion davon ist dann für den VTO-Nutzer (d.h. der Person) nicht sichtbar. Er bzw. sie sieht stattdessen nur einen Video-Livestream von sich selbst sowie das relativ dazu dargestellte 3D-Model des Produkts. Im VTO-Verfahren wir hier das 3D-Modell der Person zum Beispiel zum korrekten bestimmen oder Rendern verdeckter Bereiche des Modells des Produktes verwendet, das gerade im VTO anprobiert wird.

In US 2021/0065285 A1 werden Systeme, Verfahren und maschinenlesbare Medien für die virtuelle Anpassung von Gegenständen wie Brillen und/oder Brillengestellen beschrieben. Eine Benutzerschnittstelle für die virtuelle Anpassung kann auf einem Server oder einem Benutzergerät implementiert werden und dreidimensionale Informationen für den Benutzer und dreidimensionale Informationen für jedes Gestell verwenden, wobei die Gestellinformationen in einer Gestelldatenbank gespeichert sind, um Gestelle zu identifizieren und/oder zu empfehlen, die dem Benutzer wahrscheinlich passen werden. Die Passforminformationen können für eine Gruppe von Brillengestellen oder für jedes einzelne, vom Benutzer ausgewählte Brillengestell bereitgestellt werden. Die Passforminformationen können mit einem statischen Bild der Brillenfassungen und/oder im Rahmen einer virtuellen Anprobe bereitgestellt werden, bei der die Brillenfassungen virtuell auf ein Echtzeitbild des Benutzers gesetzt werden.

In EP 3 410 178 A1 werden Verfahren, Computerprogramme und Vorrichtungen zur virtuellen Brillenanprobe beschrieben. Hierfür werden 3D-Modelle eines Kopfes und einer Brillenfassung sowie Kopf-Metadaten auf Basis des Modells des Kopfes und Fassungs-Metadaten auf Basis des Modells der Fassung bereitgestellt. Die Kopf-Metadaten umfassen dabei Auflageinformationen, insbesondere einen Auflagepunkt, welcher zum erstmaligen Positionieren der Brillenfassung an dem Kopf dienen kann, und/oder einen Auflagebereich, welcher einen Bereich der Bügel der Fassung zur Auflage auf den Ohren des Kopfes beschreibt.

Es ist eine Aufgabe der vorliegenden Erfindung, die Art und Weise der Generierung einer Voraussage eines realen Sitzes eines realen Brillengestells am Kopf einer Person mit individueller Kopfgeometrie, insbesondere im Rahmen eines VTO, weiter zu verbessern. Insbesondere ist es wünschenswert, bei gegebenen Computing-Ressourcen eine Verbesserung im Hinblick auf eine Effizienzsteigerung und/oder Echtzeitfähigkeit eines zum Generieren der Voraussage genutzten computergestützten Verfahrens zu erreichen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zur virtuellen Voraussage, insbesondere im Rahmen einer virtuellen Anprobe, eines realen Sitzes eines realen Brillengestells bestimmter Gestellgeometrie am Kopf einer Person mit individueller Kopfgeometrie, wobei das Verfahren aufweist:
(A) Erfassen von Kopfmodelldaten, die ein dreidimensionales virtuelles Kopfmodell zumindest eines Teils des Kopfes der Person repräsentieren;
(B) Erfassen von Brillenmodelldaten, die ein dreidimensionales virtuelles Brillenmodell zumindest eines Teils der Gestellgeometrie des Brillengestells repräsentieren;
(C) einen ersten Platzierungsschritt, in dem eine Punktmenge aus einer Mehrzahl von durch oder auf Basis der Brillenmodelldaten vordefinierten Brillenreferenzpunkten an dem Brillenmodell relativ zu einer Punktmenge aus einem oder mehreren durch oder auf Basis der Kopfmodelldaten vordefinierten initialen Kopfreferenzpunkten an dem Kopfmodell ausgerichtet wird, um eine initiale virtuelle Platzierung des Brillenmodells am Kopfmodell zu definieren. Die genannten Punktmengen können insbesondere anhand von den jeweiligen Brillenreferenzpunkten bzw. Kopfreferenzpunkten zugeordnete Metadaten definiert sein, die zu jedem dieser Punkte beschreiben, zu welchem Teilbereich des Brillenmodells bzw. des Kopfmodells der jeweilige Punkte gehört. Zum Beispiel können ein oder mehrere an der Nasenwurzel des Kopfmodells liegende initiale Kopfreferenzpunkte ("Nasenwurzelpunkte") und diesen zugeordnete initiale Brillenreferenzpunkte jeweils durch die Metadaten definiert sein;
(D) einen Anpassungsprozess mit einem oder mehreren dem ersten Platzierungsschritt nachfolgend iterativ ausgeführten weiteren Platzierungsschritten, in denen jeweils mittels Raycasting anhand eines jeweiligen von einem oder mehreren der Brillenreferenzpunkte ausgehenden virtuellen Strahls (Halbgerade) ein oder mehrere zusätzliche Kopfreferenzpunkte am Kopfmodell bestimmt und zur Ermittlung zumindest eines Parameterwerts einer parametrisierten translatorischen und/oder rotatorischen Transformation der Brillenreferenzpunkte zur Anpassung der virtuellen Platzierung der Brillenreferenzpunkte relativ zum Kopfmodel herangezogen werden und die entsprechend festgelegte Transformation bezüglich der Brillenreferenzpunkte ausgeführt wird; und
(E) Generieren und Ausgeben von Vorhersageinformationen, die auf Basis der sich im Rahmen der Iteration aus der Transformation des zuletzt ausgeführten Platzierungsschritts ergebenden virtuellen Platzierung der Brillenreferenzpunkte relativ zu den Kopfreferenzpunkten eine Voraussage zum realen Sitz des realen Brillengestells am Kopf der Person repräsentieren.

Unter dem Begriff "Erfassen" von Kopfmodelldaten bzw. Brillenmodelldaten, wie hierin verwendet, ist insbesondere (i) ein Zugreifen auf solche Daten, etwa mittels Empfangen der Daten von einer Datenquelle, z.B. über eine Kommunikationsverbindung oder eine sonstige Datenschnittstelle (z.B. Benutzerschnittstelle) oder mittels Auslesen aus einem Datenspeicher, oder (ii) ein Generieren solcher Daten in Rahmen des Verfahrens selbst, insbesondere mithilfe von sensorischem Erfassen (insbesondere per 3D-Scan) oder Berechnungen auf Basis eines Computermodells in Abhängigkeit von Inputdaten zu verstehen, die für die Form des Kopfes der Person bzw. des Brillengestells charakteristische Informationen repräsentieren.

Unter dem Begriff "ausgerichtet" bzw. "ausrichten" usw. zweier Punktmengen, wie hierin verwendet, ist insbesondere zu verstehen, dass zumindest eine der beiden Punktmengen, hier insbesondere die Menge der Brillenreferenzpunkte, im virtuellen Raum bewegt wird, insbesondere per Translation und/oder Rotation, um sie zumindest bezüglich eines verfügbaren Freiheitsgrads (normalerweise gibt es, soweit dem keine Randbedingungen entgegenstehen, im dreidimensionalen Raum drei translatorische und drei rotatorische Freiheitsgrade) in ein vorbestimmtes räumliches Verhältnis zur anderen Punktmenge zu bringen. Dabei werden alle Punkte einer zu bewegenden Punktmenge derselben Transformation unterzogen, so dass innerhalb jeder Punktmenge die relative Anordnung der Punkte transformationsinvariant ist, d.h. bei der Transformation erhalten bleibt. Insbesondere kann das vorbestimmte räumliche Verhältnis so definiert sein, dass einer oder mehrere Punkte der einen Punktmenge mittels der Transformation(en) mit dazu korrespondierenden Punkten der anderen Punktmenge zur Deckung gebracht werden.

Unter dem Begriff "virtuell", wie hierin verwendet, ist insbesondere zu verstehen, dass sich das damit gekennzeichnete "virtuelle" Objekt bzw. eine damit gekennzeichnete Handlung auf eine vom Computer simulierte Wirklichkeit bezieht. Ein virtuelles Objekt, wie etwa ein Kopfmodell oder Brillenmodell im Sinne der Erfindung existiert somit als solches nicht in der Realität, sondern nur als Objekt im virtuellen Raum. Wenn somit die Rede davon ist, dass das Brillenmodell virtuell am Kopfmodell platziert wird, dann bedeutet dies, dass im virtuellen Raum eine durch das Brillenmodell repräsentiertes virtuelles Brillengestell an dem durch das Kopfmodell repräsentierten virtuellen Kopf platziert, d.h. angeordnet wird. Dasselbe gilt, wenn abkürzend nur davon die Rede ist, dass das Brillenmodell am Kopfmodell platziert wird.

Unter dem Begriff "Brillenmodell", wie hier verwendet, ist eine virtuelle Repräsentation zumindest eines Teils eines Brillengestells zu verstehen. Entsprechend ist unter dem Begriff "Kopfmodell", wie hier verwendet, ist eine virtuelle Repräsentation zumindest eines Teils eines Kopfes einer Person zu verstehen. Jedes der Modelle kann jeweils insbesondere als 3D-Mesh, insbesondere Polygonmodell (Polygonnetz), mit Knoten und Kanten definiert sein.

Unter dem Begriff "Kopfreferenzpunkte", wie hierin verwendet, sind insbesondere bestimmte ausgewählte Punkte am Kopfmodell zu verstehen, die als kopfseitige Bezugspunkte für die Ausrichtung des Brillenmodells bzw. von dessen Brillenreferenzpunkte am Kopfmodell bzw. an dessen Kopfreferenzpunkten dienen. Entsprechend sind unter dem Begriff "Brillenreferenzpunkte", wie hierin verwendet, insbesondere bestimmte ausgewählte Punkte am Brillenmodell zu verstehen, die als brillengestellseitige Bezugspunkte für die Ausrichtung des Brillenmodells anhand der Brillenreferenzpunkte, am Kopfmodell bzw. an dessen Kopfreferenzpunkten dienen.

Unter dem Begriff "Raycasting" (in englischer Schreibweise meist "ray casting"), wie hier verwendet, ist insbesondere ein auf der Aussendung von virtuellen Strahlen im virtuellen Raum basierender Algorithmus zur Verdeckungsberechnung, also zur Ermittlung der Sichtbarkeit von dreidimensionalen Objekten von einem bestimmten Punkt im Raum aus zu verstehen. Dabei wird ausgehend von einem Ausgangspunkt, insbesondere einem Brillenreferenzpunkt, ein entlang einer Gerade verlaufender virtueller Strahl entlang einer vorbestimmten bestimmten Richtung "ausgesandt" und gegebenenfalls ein Schnittpunkt des Strahls mit einer Szene, hier konkret einer Oberfläche des Kopfmodells, bestimmt. Ein solcher bestimmter Punkt kann insbesondere als (zusätzlicher) Kopfreferenzunkt definiert werden. Insbesondere können dabei ausgehend von dem Ausgangspunkt zwei zueinander antiparallel verlaufende Strahlen ausgesandt werden, wodurch insbesondere anhand der Lage eines dabei bestimmten Schnittpunkts mit einer Oberfläche des Kopfmodells festgestellt werden kann, ob sich der Ausgangspunkt innerhalb oder außerhalb des Kopfmodells befindet. Gelegentlich wird auf dem technischen Gebiet der Computergrafik auch der Begriff "Raytracing" synonym zu "Raycasting" verwendet, wenngleich der Begriff "Raycasting" auf dem Gebiet der Computergrafik auch noch andere Bedeutungen haben kann.

Unter dem Begriff "Voraussage", wie hierin verwendet, ist insbesondere eine Schätzung oder Berechnung einer Information zu verstehen, die eine Qualität oder Quantität beschreibt, aus der sich auf einen guten oder schlechten Sitz, insbesondere einen Tragekomfort, einen Halt, oder eine sichtfördernde oder sichtstörende relative Positionierung des Brillenmodells am Kopfmodell bzw. dazu korrespondierend eines im Brillenmodell modellierten realen Brillengestells am realen Kopf einer im Kopfmodell modellierten realen Person schließen lässt. Insbesondere kann die Voraussage eine bildliche Darstellung des sich aus dem Verfahren ergebenden Sitzes des Brillenmodells am Kopfmodell oder einen oder mehrere daraus abgeleitete Informationen, insbesondere im Sinne eines Qualitätsmaßes für den Sitz, umfassen.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder ein System, das eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einem solchen System inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon), wie er hier gegebenenfalls verwendet wird, ist im Sinne der Erfindung zu verstehen, dass die entsprechende Vorrichtung oder das entsprechende System bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung/das System mehrere vorbestimmte Konfigurationen oder Betriebsmodi aufweisen, so dass das konfigurieren mittels einer Auswahl einer dieser Konfigurationen bzw. Betriebsmodi erfolgen kann.

Mittels des Verfahrens nach dem ersten Aspekt lässt sich die tatsächliche Passform des im Brillenmodell modulierten realen Brillengestells an dem im Kopfmodell modellierten realen Kopf der Person, insbesondere die physische Interaktion und Kollisionserkennung zwischen beiden Modellen, mit hoher Qualität ermitteln, um so auf einen guten oder schlechten Sitz schließen zu können. Insbesondere lassen sich so Aussagen über die korrekte Passform einer Brille relativ zum Gesicht des Brillenträgers, d. h. der Person, im virtuellen Raum treffen und das sogar zu einem Zeitpunkt, an dem das reale Brillengestell noch gar nicht existieren muss.

Da das Verfahren sich vor allem auf eine relative Positionierung der Brillenreferenzpunkte zu den Kopfreferenzpunkten, insbesondere zu den zusätzlichen Kopfreferenzpunkten, stützt, ohne dass zur Bestimmung des Sitzes des Brillenmodells am Kopfmodell die Gesamtheit der beiden Modelle, insbesondere im Falle von Polygonmodellen sämtliche Knoten und/oder Kanten solcher Modelle, berücksichtigt werden müssen, lässt sich das Verfahren mit einem relativ geringen Rechenaufwand und somit auch bei begrenzten Rechenressourcen, die mit einer VTO gleicher Qualität mit einem herkömmlichen VTO-Verfahren überfordert wären (z.B. bei vielen heutigen batteriebetriebenen mobilen Endgeräten, insbesondere Smartphones oder Tablet-Computer) schneller ausführen, bis hin zur Ausführung in Echtzeit. So kann dem späteren Brillenträger auf schnelle und effiziente Weise im Rahmen eines auf dem Verfahren nach dem ersten Aspekt beruhenden VTO eine Möglichkeit geboten werden, eine zuverlässige Voraussage bezüglich des voraussichtlichen Tragekomforts, der Ästhetik und der Passform des durch das Brillenmodell virtuell repräsentierten realen Brillengestells an dem Kopf der Person zur Verfügung gestellt werden. Mithin kann so auch dazu beigetragen werden, einerseits Fehlkäufe zu vermeiden und andererseits eine Auswahl eines optimalen Brillengestells für die Person zu unterstützen.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Zur beispielhaften Erläuterung einiger der Ausführungsformen wird im Weiteren ein in dem Brillenmodell verankertes lokales kartesisches Koordinatensystem verwendet. Das Brillenmodell weist dabei, wie bei Brillen allgemein üblich, ein Frontteil mit den jeweiligen Fassungen für zwei Brillengläser, einen die beiden Fassungen verbindenden Nasensteg sowie zwei an dem Frontteil befestigte Ohrenbügel auf. Der Ursprung des lokalen Koordinatensystems liegt auf einem zentralen Punkt am Nasensteg. Wenn man eine Verbindungsgerade zwischen den jeweiligen geometrischen Mittelpunkten der Fassung für das rechte Auge und der Fassung für das linke Auge eines (virtuellen) Brillenträgers bzw. des Kopfmodells bei einem normalen Brillensitz am Kopf bzw. Kopfmodell legt, dann definiert diese Verbindungsgerade die X-Richtung des lokalen Koordinatensystems. Die Blickrichtung des (virtuellen) Brillenträgers gemäß Kopfmodell wird hier beispielhaft als Z-Richtung des lokalen Koordinatensystems festgelegt. Die Z-Richtung kann insbesondere auch, auf das Brillenmodell selbst bezogen, so definiert werden, dass sie parallel zu den voll aufgeklappten Brillenbügeln des Brillenmodells vor seiner Anpassung verläuft. In der Regel sind diese beiden beispielhaften Definitionen jedoch äquivalent. Die Y-Richtung verläuft senkrecht zur X-Richtung und zur Z-Richtung auf solche Weise, dass sich ein rechtshändiges Koordinatensystem mit der X-Achse als erster Achse, der Y-Achse als zweiter Achse und der Z-Achse als dritter Achse ergibt.

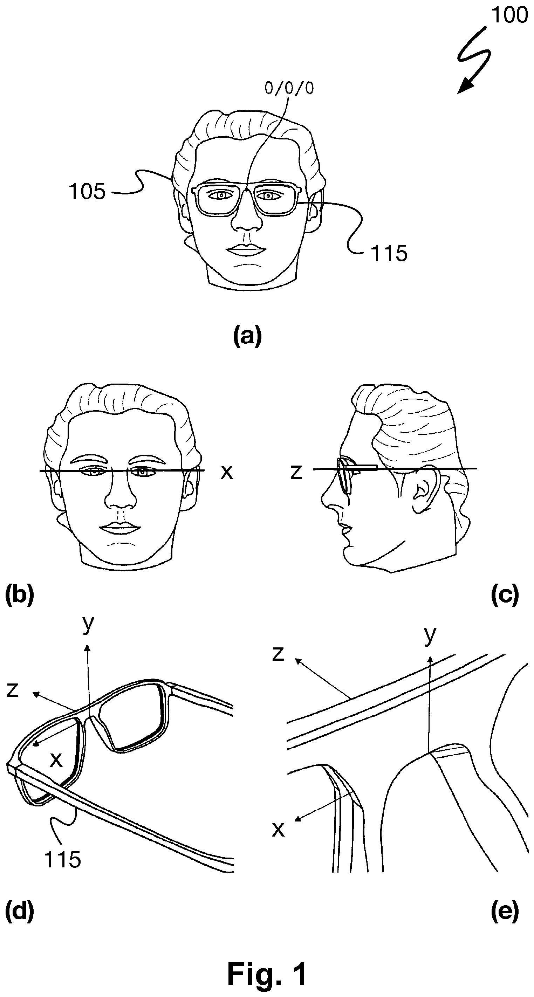

Das initiale Platzieren gemäß dem ersten Platzierungsschritt kann somit zweckmäßigerweise insbesondere so erfolgen, dass im Ergebnis die (auf das Brillenmodell bezogen definierte) Z-Achse des lokalen Koordinatensystems mit der Geradeaus-Blickrichtung des (virtuellen) Brillenträgers gemäß Kopfmodell übereinstimmt. Ein solches lokales Koordinatensystem ist beispielhaft in **Fig.** 1 illustriert. Im Rahmen des im Weiteren folgenden Anpassungsprozesses kann die Lage des Brillenmodells relativ zum Kopfmodell jedoch fallweise so verändert werden, dass die Z-Richtung des im Brillenmodell verankerten lokalen Koordinatensystems und die Geradeaus-Blickrichtung des (virtuellen) Brillenträgers gemäß Kopfmodell nicht mehr zusammenfallen.

Bei einigen Ausführungsformen weist das Ermitteln der Transformation für den jeweils aktuellen, d.h. momentan im Rahmen des Verfahrens durchlaufenen, Platzierungsschritt ein Anpassen von zumindest einem Parameter der Transformation in Abhängigkeit von der relativen Lage, insbesondere einem geometrischen Abstand von zumindest einem der Brillenreferenzpunkte zu zumindest einem der im aktuellen Platzierungsschritt bestimmten zusätzlichen Kopfreferenzpunkte zur Erreichung eines bezüglich dieser Lage definierten Anpassungsziels auf. Beispielsweise könnte im Rahmen des Ermittelns der Transformation festgestellt werden, dass ein bestimmter Brillenreferenzpunkt von der Oberfläche des Kopfmodells beabstandet ist, obwohl er gemäß eines Anpassungsziels eigentlich dazu bestimmt ist, auf dieser Oberfläche aufzuliegen. In diesem Fall kann zumindest ein relevanter Parameter in Abhängigkeit von diesem Abstand so bestimmt werden, dass die Transformation den Brillenreferenzpunkt auf die Oberfläche abbildet bzw. verschiebt. Andererseits könnte im Rahmen des Ermittelns der Transformation festgestellt werden, dass ein bestimmter Brillenreferenzpunkt innerhalb des Kopfmodells liegt, was in der realen Welt einem Zustand entsprechen würde, in dem ein entsprechender Abschnitt der Brille in den Kopf der Person "eingedrungen" ist. Um einem solchen, offensichtlich unerwünschten oder gar sinnlosen Szenario zu begegnen, und den Sitz des Brillenmodells am Kopfmodell so zu verändern, dass dieses Szenario vermieden wird, kann nun zumindest ein relevanter Parameter der Transformation so bestimmt werden, dass der Brillenreferenzpunkt auf die Oberfläche des Kopfmodells, wenn er dort anliegen soll (Anpassungsziel 1), oder andernfalls beabstandet davon in den freien Raum davor (Anpassungsziel 2) transformiert wird. Wie schon erwähnt, wird bei allen im Verfahren genutzten Transformationen nie ein einzelner Brillenreferenzpunkt, sondern stets die gesamte Menge der Brillenreferenzpunkte derselben jeweiligen Transformation unterzogen, so dass die relative Anordnung der Brillenreferenzpunkte untereinander bei den Transformationen invariant bleibt. Das bedeutet insbesondere, dass die Positionen der Brillenreferenzpunkte im lokalen Koordinatensystem invariant sind.

Bei einigen Ausführungsformen weist der erste Platzierungsschritt oder zumindest einer der Platzierungsschritte des Anpassungsprozesses des Weiteren auf: (i) Bestimmen von je zumindest einem zusätzlichen Kopfreferenzpunkt auf dem Kopfmodell je Kopfseite mittels Raycasting anhand eines von einem jeweiligen Brillenreferenzpunkt an einem zur jeweils selben Kopfseite korrespondierenden Ohrenbügel des Brillenmodels ausgehenden virtuellen Strahls (Halbgerade); und (ii) Anpassen von zumindest einem Parameter der Transformation in Abhängigkeit von der jeweiligen relativen Lage, insbesondere einem jeweiligen Abstand, jedes dieser Brillenreferenzpunkte zu dem von ihm ausgehend bestimmten zusätzlichen Kopfreferenzpunkt, um eine bezüglich der linken und der rechten Kopfseite des Kopfmodells gleichbeabstandete Ausrichtung des Brillenmodells als Anpassungsziel zu erreichen. Der Parameter der Transformation kann insbesondere so gewählt sein oder werden, dass er eine Rotation um die Y-Achse definiert, etwa als Drehwinkel.

Bei einigen Ausführungsformen weist zumindest einer der Platzierungsschritte des Anpassungsprozesses zum Ermitteln der Transformation für diesen Platzierungsschritt einen oder mehrere der folgenden Teilprozesse, insbesondere gemäß der folgenden Reihenfolge, auf:
(a) Anpassen von zumindest einem Parameter der Transformation in Abhängigkeit von der relativen Lage, insbesondere einem Abstand, eines Kopfreferenzpunkts, insbesondere Ohrwurzelpunkts, an einem Ohr des Kopfmodels zu einem korrespondierenden Brillenreferenzpunkt an einem dem Ohr zugeordneten Ohrenbügel des Brillenmodels, um als Anpassungsziel eine Platzierung des Brillenmodells am Kopfmodell zu erreichen, bei welcher der Ohrenbügel auf der Ohrwurzel des Ohrs aufliegt. Das Anpassen kann insbesondere auch bezüglich beide Ohren entsprechend ausgeführt werden. Der bzw. die Parameter der Transformation kann bzw. können dabei insbesondere so gewählt sein oder werden, dass damit eine Rotation um die X-Achse und/oder die Z-Achse definiert wird, etwa als jeweiliger Drehwinkel je Achse, beispielsweise im Falle einer kombinierten Drehung zunächst um die X-Achse und dann um die Z-Achse;
(b) Bestimmen von je zumindest einem zusätzlichen Kopfreferenzpunkt auf der Nase des Kopfmodells mittels Raycasting in einer zumindest anteilig parallel zur anatomischen Horizontalachse des Kopfmodells verlaufenden Richtung anhand eines von einem jeweiligen Brillenreferenzpunkt an einem zur zumindest abschnittsweisen Umfassung der Nasenflügel einer Nase des Kopfmodells konfigurierten Nasenbereich des Brillenmodels ausgehenden virtuellen Strahls (Halbgerade); und
   Anpassen von zumindest einem Parameter der Transformation in Abhängigkeit von der jeweiligen relativen Lage, insbesondere einem jeweiligen Abstand, jedes dieser Brillenreferenzpunkte zu dem von ihm ausgehend bestimmten zusätzlichen Kopfreferenzpunkt, um als Anpassungsziel eine Zentrierung des Nasenbereichs des Brillenmodells am Kopfmodell bezüglich der parallel zur anatomischen Horizontalachse verlaufenden Richtung zu erreichen. Der bzw. die Parameter der Transformation kann bzw. können dabei insbesondere so gewählt sein oder werden, dass damit eine Rotation um die Y-Achse definiert wird, etwa als jeweiliger Drehwinkel um die Y-Achse. Die Y-Achse kann dabei zweckmäßigerweise insbesondere so verlaufen, dass sie die X-Achse auf der Hälfte der geraden Verbindungsstrecke zwischen den beiden Ohrreferenzpunkten, d.h. im Zentrum des Kopfs, schneidet. Dadurch wird die Brille auf der Nasenauflage in X-Richtung zentriert aber die Auflage der Ohrenbügel auf den Ohrpunkten wird kaum beeinflusst;
(c) Bestimmen von je zumindest einem zusätzlichen Kopfreferenzpunkt auf der Nase des Kopfmodells mittels Raycasting in einer zumindest anteilig parallel zur anatomischen Longitudinalachse des Kopfmodells verlaufenden Richtung anhand eines von einem jeweiligen Brillenreferenzpunkt an einem zur zumindest abschnittsweisen Umfassung der Nasenflügel einer Nase des Kopfmodells konfigurierten Nasenbereich des Brillenmodels ausgehenden virtuellen Strahls (Halbgerade); und
   Anpassen von zumindest einem Parameter der Transformation in Abhängigkeit von der jeweiligen relativen Lage, insbesondere einem Abstand, jedes dieser Brillenreferenzpunkte zu dem von ihm ausgehend bestimmten zusätzlichen Kopfreferenzpunkt, um als Anpassungsziel eine zumindest punktweise Auflage des Nasenbereichs des Brillenmodells an den Nasenflügeln der Nase des Kopfmodell zu erreichen. Der bzw. die Parameter der Transformation kann bzw. können dabei insbesondere so gewählt sein oder werden, dass damit eine Rotation um eine zur X-Achse parallele Achse durch die Ohrenbügel, insbesondere um eine als Verbindungsgerade zwischen den Ohrwurzelpunkten beider Kopfseiten des Kopfmodells festgelegte Drehachse, definiert wird, etwa als jeweiliger Drehwinkel um eine solche Achse;
(d) Prüfen, ob gemäß der aktuellen Platzierung des Brillenmodells am Kopfmodell eine Kollision des Brillenmodels mit einem Wangenbereich des Kopfmodells vorliegt; und
   wenn dies der Fall ist, Anpassen von zumindest einem Parameter der Transformation, um als Anpassungsziel eine Aufhebung der Kollision mit einem Wangenbereich zu erreichen. Der bzw. die Parameter der Transformation kann bzw. können dabei insbesondere so gewählt sein oder werden, dass damit eine Rotation um eine zur X-Achse parallele Achse durch die Ohrenbügel, insbesondere um eine als Verbindungsgerade zwischen den Ohrwurzelpunkten beider Kopfseiten des Kopfmodells festgelegte Drehachse, definiert wird, etwa als jeweiliger Drehwinkel um eine solche Achse entgegen der Drehrichtung aus Schritt (c);
(e) Prüfen, ob gemäß der aktuellen Platzierung des Brillenmodells am Kopfmodell eine Kollision des Brillenmodels mit einem Stirn- oder Nasenrückenbereich des Kopfmodells vorliegt; und wenn dies der Fall ist, Anpassen von zumindest einem Parameter der Transformation, um als Anpassungsziel eine Aufhebung der Kollision mit dem Stirn- bzw. Nasenrückenbereich zu erreichen. Der bzw. die Parameter der Transformation kann bzw. können dabei insbesondere so gewählt sein oder werden, dass damit eine Translation entlang eines bestimmten, hier als Brillenbügelvektor bezeichneten Vektor definiert wird. Der Brillenbügelvektor kann sich dabei insbesondere aus einer orthogonalen Projektion eines den Anfangspunkt und den Endpunkt eines Ohrenbügels verbindenden Richtungsvektors auf die lokale Y/Z-Ebene des Brillenmodells ergeben.

Unter dem Begriff "Ohrwurzelpunkt", wie hierin verwendet, ist ein Punkt, insbesondere der in anatomisch longitudinaler Richtung oberste Punkt, an der Ohrwurzel eines Ohrs am Kopfmodell bzw. korrespondierend dazu am realen Kopf der Person zu verstehen.

Bei einigen Ausführungsformen weist das Verfahren des Weiteren einen zwischen dem ersten Platzierungsschritt und dem Anpassungsprozess durchgeführten Verschiebungsprozess auf, bei dem die Brillenreferenzpunkte einer translatorischen Transformation in einer Richtung entlang oder parallel zu einer Nasenrückenlinie des Kopfmodells unterzogen werden, die sich zwischen einem an der Nasenwurzel des Kopfmodells gelegenen Kopfreferenzpunkt und einem auf dem Nasenrücken, insbesondere an der Nasenspitze, des Kopfmodells gelegenen weiteren Kopfreferenzpunkt erstreckt, insbesondere geradlinig. Im Rahmen des Verschiebungsprozesses kann insbesondere eine Benutzereingabe abgefragt werden, mittels der der Nutzer beim VTO einen veränderten Aufsetzpunkt des Brillenmodells auf dem Nasenrücken des Kopfmodells bestimmen kann, um in Abhängigkeit davon eine Verschiebung dieses Aufsetzpunkts, insbesondere in Richtung Nasenspitze, zu veranlassen und damit dem Verfahren mittzuteilen, wie weit er seine Brille von Stirn entfernt tragen möchte. Alternativ können Informationen zum gewünschten Aufsetzpunkt auch ohne Benutzereingabe vorab dem Prozess als benutzerspezifische Konfigurationsdaten zur Verfügung gestellt werden.

Bei einigen Ausführungsformen weist das Verfahren des Weiteren einen dem Anpassungsprozess nachfolgenden Passformermittlungsprozess auf, der zumindest einen der folgenden Teilprozesse (i) bis (vi) (einschließlich der ggf. dazu erforderlichen anderen Teilprozesse) umfasst:
(i) Bestimmen, auf Basis der aus dem Anpassungsprozess resultierenden Platzierung des Brillenmodells an dem Kopfmodell und für zumindest einen Ohrenbügel des Brillenmodells, einer jeweiligen Länge eines Ohrenbügelabschnitts, der sich zwischen einem Frontteil des Brillenmodells und dem Auflagepunkt des Ohrenbügels an einem Ohrwurzelpunkt am Kopfmodell erstreckt. Dies kann insbesondere genutzt werden, um bei bekannter Gesamtlänge des Ohrenbügels auf dessen Passform zu schließen, insbesondere darauf, ob er zu lang oder zu kurz ist und dementsprechend einen suboptimalen Sitz am Ohr bietet.
(ii) Abschätzen eines Anpressdrucks eines zu dem Ohrenbügel des Kopfmodells korrespondierenden Ohrenbügels des realen Brillengestells am realen Kopf der Person mittels Berechnung eines virtuellen Anpressdrucks des Ohrenbügels des Brillenmodells am Kopfmodell als Funktion der bestimmten Länge des Ohrenbügelabschnitts und bekannten Elastizitätseigenschaften des realen Ohrenbügels. Dies kann insbesondere genutzt werden, um auf eine Passform des Bügels in lateraler Richtung und somit auch auf einen wichtigen Aspekt des Tragekomforts eines dem Brillenmodell entsprechenden realen Brillenmodells relativ zu dem dem Kopfmodell entsprechenden realen Kopf der Person zu schließen.
(iii) Ermitteln, auf Basis der aus dem Anpassungsprozess resultierenden Platzierung des Brillenmodells an dem Kopfmodell und für zumindest einen mehrere Brillenreferenzpunkte aufweisenden Teilbereich des Brillenmodells, welcher Anteil dieser Brillenreferenzpunkte auf dem Kopfmodell aufliegt. Dieser Anteil kann insbesondere absolut als Zahl oder relativ, z.B. als Prozentsatz, ermittelt werden. Dies kann insbesondere genutzt werden, um auf eine Passform des Brillenmodells und somit des korrespondierenden realen Brillengestells insgesamt oder individuell des zumindest einen Teilbereichs am Kopfmodell bzw. dem korrespondierenden realen Kopf der Person zu schließen. Für das Brillengestell insgesamt bzw. den hier relevanten zumindest einen Teilbereich können insbesondere entsprechende Referenzpassformdaten definiert sein oder werden, die mit dem per Teilprozess (iii) bestimmten Anteil(en) verglichen werden können, um darauf basierend, insbesondere gemäß einem der nachfolgend genannten Teilprozesse (iv) oder (v), auf eine Güte einer Passform des Brillenmodells bzw. der korrespondierenden realen Brillengestells zu schließen. Auch ist es denkbar, in Abhängigkeit von dem Anteil eine Entscheidung dahingehend zu treffen ob der Anpassungsprozess erfolgreich war oder nicht und im letzteren Fall das Verfahren abzubrechen (und optional eine Fehlermeldung auszugeben) oder erneut zu durchlaufen.
(iv) Ermitteln, auf Basis der aus dem Anpassungsprozess resultierenden Platzierung des Brillenmodells an dem Kopfmodell, für zumindest einen ausgewählten Brillenreferenzpunkt dessen jeweilige relative räumliche Lage bezüglich zumindest eines Punkts, der einem Kopfreferenzpunkt entspricht oder in Abhängigkeit von den jeweiligen Positionen mehrerer Kopfreferenzpunkte bestimmt wird. Zum Beispiel kann aus Brillenreferenzpunkten am oberen und unteren Brillenfrontteil eine Distanz berechnet werden, welche die Höhe des Brillengestells zumindest näherungsweise beschreibt. Anhand der jeweiligen Positionen von an den Augen, insbesondere den Pupillen definierten Kopfreferenzpunkten kann nun insbesondere je Auge bzw. Brillenglasöffnung im Brillengestell ein Durchblickspunkt des Brillenträgers zumindest grob bestimmen werden. Der Durchblickspunkt sollte zum Beispiel idealerweise etwas über dem geometrischen Mittelpunkt der zugehörigen Brillenglasöffnung im Brillengestell bzw. eines Brillenglases darin liegen.
(v) Abschätzen der Güte einer Passform des realen Brillengestells am realen Kopf der Person in Abhängigkeit von dem (nach Teilprozess (ii)) abgeschätzten Anpressdruck, dem (nach Teilprozess (iii)) ermittelten Anteil der am Kopfmodell aufliegenden Brillenreferenzpunkte des Teilbereichs und/oder von einer oder mehreren (nach Teilprozess (iv)) ermittelten relativen Lagen;
(vi) Ermitteln einer Bewertung der Passform anhand eines Vergleichs der (nach Teilprozess (v)) abgeschätzten Güte der Passform mit dazu korrespondierenden Referenzdaten;
(vii) Ausgeben der ermittelten Güte und/oder Bewertung der Passform als Bestandteil der Vorhersageinformationen. Das Ausgeben kann insbesondere an einer Benutzerschnittstelle erfolgen, um einem Benutzer das Ergebnis der Passformbewertung mitzuteilen. Zusätzlich oder alternativ kann das Ausgeben auch das Bereitstellen von die Passformbewertung oder eine davon abgeleitete Größe repräsentierenden Ausgabedaten umfassen. So kann insbesondere in Abhängigkeit von diesen Ausgabedaten ein nachfolgender Prozess initiiert, konfiguriert oder gesteuert werden, wie etwa eine Prozess zur Erstellung eines (abgeänderten oder bezüglich seiner Auflösung verfeinerten) 3D-Modells des Brillengestells für seine darauf beruhenden Maßfertigung, insbesondere mittels eines 3D-Druckverfahrens.

Im Falle einer Anwendung des im Folgenden noch beschriebenen Maßparameterermittlungsprozesses können die in einem oder mehreren der o.g. Teilprozesse (i) bis (vii) bestimmten Informationen insbesondere auch als Input für den Maßparameterermittlungsprozess genutzt werden, um eine entsprechende angepasste Form des Brillenmodells und des in Abhängigkeit davon nachfolgend als Maßbrille zu fertigenden realen Brillengestells zu bewirken.

Dementsprechend weist das Verfahren bei einigen Ausführungsformen des Weiteren einen Maßparameterermittlungsprozess auf, bei dem in Abhängigkeit von zumindest einem Ergebnis des Passformermittlungsprozesses einer oder mehrere Maßparameter einer gegenüber der durch die Brillenmodelldaten repräsentierten Gestellgeometrie abgeänderten Gestellgeometrie des Brillengestelles als Inputdaten für eine in Abhängigkeit von den Inputdaten gesteuerte Fertigung eines realen Brillengestells, insbesondere mittels eines 3D-Druckverfahrens, erzeugt werden.

Bei einigen Ausführungsformen wird die jeweilige Lage zumindest eines der initialen Kopfreferenzpunkte so definiert, dass der jeweilige initiale Kopfreferenzpunkt an einer ausgewählten Körperregion des Kopfmodells liegt, die zuvor mittels algorithmischer Gesichtserkennung auf Basis der Kopfmodelldaten oder zumindest eines bildsensorisch erfassten Abbilds des Gesichts der realen Person ausgewählt wurde. Dies ermöglicht insbesondere eine Automatisierung des Verfahrens, ohne dass eine Definition der initialen Kopfreferenzpunkte währenddessen oder vorab auf andere Weise, insbesondere manuell, durchgeführt werden müsste.

Bei einigen Ausführungsformen wird zumindest einer der initialen Kopfreferenzpunkte am Kopfmodell so definiert, dass er an einer der folgenden Körperregionen des Kopfmodells liegt: Auge (insbesondere Pupille), Augenbraue, Nase (insbesondere Nasenwurzel oder Nasenrücken oder Nasenflügel), Schläfenbein, Ohr. Es hat sich herausgestellt, dass zum einen diese Körperregionen zum einen im Rahmen gegenwärtig verfügbarer Gesichtserkennungsalgorithmen sehr zuverlässig korrekt identifiziert werden können und dass zum anderen diese Körperregionen eine besondere Bedeutung für die Platzierung des Brillengestells am Kopf haben, weil entweder typischerweise Berührungspunkte zwischen Brillengestell und Kopf in diesen Körperregionen liegen (v.a. im Nasenbereich oder am Ohr) oder gerade solche Berührungspunkte vermieden werden sollen (z.B. an Augenbrauen oder Wangen) oder aber die relative Platzierung des realen Brillengestells zum realen Kopf aus augenoptischen Gründen sich an solchen Punkten orientieren sollte (v.a. Auge, Pupille). Die in diesen Körperregionen definierten initialen Kopfreferenzpunkte können auch durch entsprechende Metadaten der jeweiligen Körperregion zugeordnet werden, so dass sie selektiv für die weiteren Platzierungsschritte im Rahmen des Anpassungsprozesses herangezogen werden können, um aus der Menge aller initialen Kopfreferenzpunkte die für den jeweiligen Platzierungsschritt oder Teilprozess davon relevanten initialen Kopfreferenzpunkte effizient auswählen zu können.

Bei einigen Ausführungsformen ist oder wird die jeweilige Lage zumindest eines der initialen Brillenreferenzpunkte so vordefiniert, dass der jeweilige initiale Brillenreferenzpunkt an einem der folgenden Bereiche des Brillenmodells liegt: einer Kante (insbesondere einer Leitkurve) am unteren oder oberen Rahmen eines Frontteils, einem Nasenbereich, einem Frontbackenbereich, einem Ohrenbügel. Die Kante kann insbesondere an der Seite des Frontteils liegen, die bei "normaler" Platzierung des Brillenmodells dem Kopfmodell zugewandt ist. Unter "normaler Platzierung" ist hier eine Platzierung zu verstehen, bei der das Brillengestell mit seinem Nasensteg auf der Nase und die Ohrenbügel auf dem jeweiligen Ohrwurzelpunkt des Kopfmodells aufsitzen.

Bei einigen Ausführungsformen ist oder wird in zumindest einem der Bereiche des Brillenmodells jeweils eine Menge aus zumindest drei Brillenreferenzpunkten so vordefiniert, dass zumindest einer der Brillenreferenzpunkte der Menge bezüglich zwei der anderen Brillenreferenzpunkte der Menge denselben Abstand aufweist. So ergibt sich eine gleichbeabstandete Anordnung der Brillenreferenzpunkte aus der Menge, was insbesondere im Hinblick auf die Vermeidung von zu großen Lücken und sich daraus potenziell im Anpassungsprozess ergebender Ungenauigkeiten bei der Bestimmung eines optimalen Sitzes vorteilhaft sein kann.

Bei einigen Ausführungsformen sind oder wird an zumindest einer der Kanten, insbesondere Leitkurven, des Brillenmodells zumindest jeweils eine Anzahl M mit M ≥ 6, insbesondere 15 ≥ M ≥ 6 Brillenreferenzpunkte vordefiniert. Es hat sich herausgestellt, dass damit regelmäßig eine für Zwecke einer VTO ausreichend zuverlässige und genaue Voraussage des Sitzes eines Brillengestells am Kopf erreichen lässt. Außerdem tragen mehr als 15 Brillenreferenzpunkte je Kante in der Regel kaum noch zu relevanten Genauigkeitsverbesserungen bei, so dass aus Effizienzgründen, insbesondere auch im Hinblick auf eine angestrebte Echtzeitfähigkeit des Verfahrens bei gegebenen Rechenressourcen, eine Beschränkung in dieser Hinsicht auch vorteilhaft sein kann.

Bei einigen Ausführungsformen wird das Kopfmodell so erfasst, dass es in den Kopfmodelldaten als ein Polygonnetz oder Menge von Polygonnetzen repräsentiert ist und die Gesamtzahl der in diesem bzw. diesen Polygonnetzen definierten Knoten zumindest 150.000 beträgt. Damit lässt sich regelmäßig eine für VTO-Zecke ausreichend hohe Genauigkeit für einen effektiven Anpassungsprozess erreichen.

Insbesondere kann dabei gemäß einiger Ausführungsformen die Anzahl der initialen Kopfreferenzpunkte geringer, insbesondere um eine oder mehrere Größenordnungen geringer, gewählt werden, als die Gesamtzahl der Knoten des bzw. der Polygonnetze des Kopfmodells. Dies ist vor allem im Hinblick auf eine Förderung der Effizienz des Verfahrens vorteilhaft, da somit die Anzahl der im Rahmen der Platzierungsschritte zu berücksichtigenden Kopfreferenzpunkte beschränkt werden kann, ohne dabei die Genauigkeit der Auflösung des Kopfmodells selbst (d.h. insbesondere die Zahl seiner Knoten) zu reduzieren. Insbesondere kann gemäß einiger Ausführungsformen die Anzahl der initialen Kopfreferenzpunkte auf eine Anzahl von 50 oder weniger beschränkt sein oder werden.

Bei einigen Ausführungsformen wird das Brillenmodell so erfasst, dass es in den Brillenmodelldaten als ein Polygonnetz oder Menge von Polygonnetzen repräsentiert ist und die Gesamtanzahl der in diesem bzw. diesen Polygonnetzen definierten Knoten zumindest 50.000 beträgt. Damit lässt sich regelmäßig eine für VTO-Zecke ausreichend hohe Genauigkeit für einen effektiven Anpassungsprozess und eine insbesondere grafische Darstellung des daraus resultierenden virtuellen Sitzes des Brillenmodells am Kopfmodell erreichen.

Insbesondere kann dabei gemäß einiger Ausführungsformen die Anzahl der Brillenreferenzpunkte geringer, insbesondere um eine oder mehrere Größenordnungen geringer, gewählt werden als die Gesamtzahl der Knoten des bzw. der Polygonnetze des Brillenmodells. Auch dies ist vor allem im Hinblick auf eine Förderung der Effizienz des Verfahrens vorteilhaft, da somit die Anzahl der im Rahmen der Platzierungsschritte zu berücksichtigenden Kopfreferenzpunkte beschränkt werden kann, ohne dabei die Genauigkeit der Auflösung des Brillenmodels selbst (d.h. insbesondere die Zahl seiner Knoten) zu reduzieren. Insbesondere kann gemäß einiger Ausführungsformen die Anzahl der Brillenreferenzpunkte auf eine Anzahl von 100 oder weniger beschränkt sein oder werden.

Bei einigen Ausführungsformen wird zur Ermittlung der initialen Kopfreferenzpunkte eine in den Kopfmodelldaten repräsentierte Texturinformation, welche eine Textur des Kopfes der realen Person repräsentiert, herangezogen. Die Textur kann insbesondere verschiedene markante Aspekte des Gesichts der Person repräsentieren, wie etwa Augen, insbesondere Pupillen, Augenbrauen, Ohren, Haare bzw. Haaransätze, Bart, oder markante Gesichtsformen, wie etwa Kinn, Wangenknochen, Nase, Mund. Auf Basis der Texturinformationen lassen sich für die Platzierung des Brillenmodells am Kopfmodell besonders geeignete initiale Kopfreferenzpunkte, wie etwa an der Nasenwurzel, den Ohrwurzeln, Augen, Augenbrauen, Nasenflügeln usw. besonders zuverlässig identifizieren, so dass damit die Qualität der Platzierung gesteigert werden kann. Auch kann dies der weiteren Effizienzsteigerung dienen, da die initialen Kopfreferenzpunkte auf Basis der Texturinformationen oftmals schneller identifiziert werden können, als allein auf Basis von nur die Kopfgeometrie repräsentierenden Kopfmodelldaten, insbesondere dann wenn die Identifikation der Kopfreferenzpunkte mittels eines iterativen Verfahrens erfolgt und bei Verwendung der Texturinformationen zumindest im Durchschnitt weniger Iterationsdurchläufe erforderlich sind.

Bei einigen Ausführungsformen wird im ersten Platzierungsschritt ein Brillenreferenzpunkt, der auf einem Nasensteg des Brillenmodells liegt, auf einen Kopfreferenzpunkt, der an der Nasenwurzel des Kopfmodells liegt zur Deckung gebracht und/oder zumindest ein Brillenreferenzpunkt, der auf einem Ohrenbügel des Brillenmodells liegt, wird mit einem Kopfreferenzpunkt, der an einem Schläfenbein des Kopfmodells liegt, zur Deckung gebracht. Auf Diese Weise lässt sich auf einfachem Wege eine initiale Platzierung des Brillenmodells am Kopfmodell erreichen.

Bei einigen Ausführungsformen weist das Generieren und Ausgeben von Vorhersageinformationen ein Anwenden der durch die Kombination der einzelnen in den vorausgegangenen Platzierungsschritten festgelegten Transformationen definierten Gesamttransformation auf das gesamte Brillenmodell auf, um das Brillenmodell insgesamt gemäß dem Ergebnis des Anpassungsprozesses am Kopfmodell virtuell zu platzieren. Auch dies dient insbesondere dem Effizienzgewinn. So kann in den einzelnen Platzierungsschritten zunächst nur eine jeweils zugeordnete Transformation mittels ihrer Transformationsparameter bestimmt und auf die Brillenreferenzpunkte angewandt werden, während das Brillenmodell insgesamt noch nicht transformiert wird. Die Transformationsparameter der jeweiligen Transformation können insbesondere in einer entsprechenden Transformationsmatrix, insbesondere in einer für Translationen und Rotationen üblichen Weise, zusammengefasst sein, so dass die sich aus den einzelnen Transformationen kumulativ ergebende Gesamttransformation durch einfache Matrixalgebra, insbesondere Matrixmultiplikation, erhalten werden kann. Erst die Gesamttransformation wird dann auf das gesamte Brillenmodell angewandt, um es auf Basis der aus dem Anpassungsprozess resultierende Platzierung der Brillenreferenzpunkte relativ zum Kopfmodell zu platzieren. Auf Basis der Ergebnisse der Gesamttransformation kann dann insbesondere eine bildliche Darstellung dieser Platzierung bestimmt und ausgegeben werden.

Bei einigen Ausführungsformen wird im Anpassungsprozess zumindest bei einem Raycasting dieses Raycasting entlang einer virtuellen Richtung ausgeführt, die orthogonal zur lokalen Flächennormale der Oberfläche des Brillenmodells am jeweiligen Brillenreferenzpunkt verläuft, von dem das Raycasting ausgeht. Diese Flächennormale kann insbesondere parallel zu einer Achse des oben genannten lokalen Koordinatensystems des Brillenmodells verlaufen, was die für das Raycasting erforderlichen Rechnungen besonders einfach werden lässt und somit weiter zur Effizienz des Verfahrens beitragen kann.

Bei einigen Ausführungsformen gilt für die Anzahl N der im Anpassungsprozess iterativ ausgeführten weiteren Platzierungsschritte N ≥ 4, insbesondere kann N = 4 gewählt werden. Es hat sich gezeigt, dass sich mit N ≥ 4 sehr zuverlässig Verfahrensergebnisse erzielen lassen, bei denen der auf Basis der Platzierung des Brillenmodells am Kopfmodell vorhergesagte Sitz eines dem Brillenmodell entsprechenden realen Brillengestells an dem dem Kopfmodell entsprechenden realen Kopf der Person sehr gut mit dem vorhergesagten Sitz übereinstimmt. Während weitere Iterationsschritte jenseits des vierten zwar eine noch feinere Sitzanpassung ermöglichen, sind sie in der Regel nicht erforderlich, um eine ausreichend gute Sitzanpassung zu erreichen, so dass N = 4 regelmäßig eine besonders gut geeignete Wahl im Sinne eines Kompromisses aus Effizienz und Genauigkeit darstellt.

Ein zweiter Aspekt der Erfindung betrifft ein System, insbesondere ein Datenverarbeitungssystem, das Mittel zur Ausführung des Verfahrens nach dem ersten Aspekt insbesondere gemäß einer oder mehrerer der hierin genannten Ausführungsformen davon aufweist.

Ein dritter Aspekt der Erfindung betrifft ein Computerprogramm oder nicht-flüchtiges computerlesbares Speichermedium, mit Anweisungen, die bei ihrer Ausführung auf einem Computer oder einer Multi-Computer-Plattform bewirken, dass dieser bzw. diese das Verfahren nach dem ersten Aspekt, insbesondere gemäß einer oder mehrerer der hierin genannten Ausführungsformen, ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind (und somit eine Multi-Computer-Plattform bilden).

Das System nach dem zweiten Aspekt kann entsprechend einen Programmspeicher aufweisen, in dem das Computerprogramm nach dem dritten Aspekt abgelegt ist. Alternativ kann das System auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms nach dem ersten bzw. dritten Aspekt Verwendung finden oder Ausgaben des Computerprogramms nach dem dritten Aspekt darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch das Brillenmodell aus verschiedenen Perspektiven zur Veranschaulichung der Definition eines an einem Brillenmodell verankerten lokalen kartesischen Koordinatensystems;
**Fig. 2A-C** schematisch ein Flussdiagramm zur Veranschaulichung einer bevorzugten Ausführungsform des erfindungsgemäßen Verfahrens;
**Fig. 3** verschiedene beispielhafte Kopfreferenzpunkte an einem Kopfmodell;
**Fig. 4** verschiedene beispielhafte Brillenreferenzpunkte an einem Brillenmodell;
**Fig. 5** schematisch ein initiales Platzieren des Brillenmodells auf der Nasenwurzel des Kopfmodells im Rahmen eines ersten Platzierungsschritts des Verfahrens 200;
**Fig. 6** schematisch ein Verschieben des Brillenmodells von der Nasenwurzel des Kopfmodells entlang des Nasenrückens anhand eines Verschiebungsprozesses im Rahmen des Verfahrens aus den Figuren 2A bis 2C;
**Fig. 7** schematisch einen beispielhaften Raycasting-Prozess im Rahmen des Anpassungsprozesses des Verfahrens aus den Figuren 2A bis 2C;
**Fig. 8** schematisch einen beispielhaften Anpassungsschritt zur Erreichung einer bezüglich der linken und der rechten Kopfseite des Kopfmodells gleichbeabstandeten Ausrichtung des Brillenmodells im Rahmen des Anpassungsprozesses des Verfahrens aus den Figuren 2A bis 2C;
**Fig. 9** schematisch einen beispielhaften Anpassungsschritt zur Platzierung der Ohrenbügel des Brillenmodells auf Ohrwurzelpunkten des Kopfmodells im Rahmen des Anpassungsprozesses des Verfahrens aus den Figuren 2A bis 2C;
**Fig. 10** schematisch einen beispielhaften Anpassungsschritt zur Zentrierung des Nasenbereichs des Brillenmodells relativ zum Kopfmodell in horizontaler Richtung im Rahmen des Anpassungsprozesses des Verfahrens aus den Figuren 2A bis 2C;
**Fig. 11** schematisch einen beispielhaften Anpassungsschritt, um im Rahmen des Anpassungsprozesses des Verfahrens aus den Figuren 2A bis 2C das Brillenmodell auf dem Nasenrücken des Kopfmodells aufliegen zu lassen;
**Fig. 12** schematisch einen beispielhaften Anpassungsschritt, um im Rahmen des Anpassungsprozesses des Verfahrens aus den Figuren 2A bis 2C mögliche Kollisionen des Brillenmodells mit den Wangenbereichen des Kopfmodells zu erkennen und gegebenenfalls zu beseitigen; und
**Fig. 13** schematisch einen beispielhaften Anpassungsschritt, um im Rahmen des Anpassungsprozesses des Verfahrens aus den Figuren 2A bis 2C mögliche Kollisionen des Brillenmodells mit Stirn- und/oder Nasenrückenbereichen des Kopfmodells zu erkennen und gegebenenfalls zu beseitigen oder einen optimalen Abstand des Brillenmodells von den Stirn- und/oder Nasenwurzelbereichen einzustellen.

In den Figuren werden durchgängig dieselben Bezugszeichen für dieselben oder einander entsprechenden Elemente der Erfindung verwendet.

In **Fig. 1** ist eine beispielhafte Definition eines lokalen kartesischen Koordinatensystems 100 illustriert, welches an einem Ursprung 0/0/0 am Nasensteg eines Brillenmodells 115 verankert ist. Das Brillenmodell 115 ist in Teilfigur **Fig. 1** **(a)** bereits an einem Kopfmodell 105 platziert, wobei diese Platzierung insbesondere einer initialen Platzierung des Brillenmodells 115 gemäß einer normalen Brillenpositionierung aus dem ersten Platzierungsschritt am Kopfmodell 105 entsprechen kann. In Teilfigur **Fig. 1** **(b)** ist die X-Richtung des Koordinatensystems 100 illustriert. Auf das Brillenmodell 115 bezogen, verläuft sie zwischen den Mittelpunkten der beiden Fassungen des Brillenmodells für die Brillengläser. Im Folgenden wird, wie illustriert, davon ausgegangen, dass die X-Richtung damit parallel zur Richtung einer Verbindungsgerade durch die beiden Pupillen des Kopfmodells verläuft. In Teilfigur **Fig. 1** **(c)** ist die Z-Richtung des Koordinatensystems 100 illustriert. Auf das Brillenmodell 115 bezogen, verläuft sie senkrecht zur X-Richtung und ist des Weiteren so ausgerichtet, dass sie mit der Geradeaus-Blickrichtung des Kopfmodells 105 zusammenfällt. Wie in den Teilfiguren **Fig. 1** **(d) und (e)** illustriert, steht die Y-Richtung senkrecht einerseits zur X-Richtung und andererseits zur Z-Richtung, wobei die mit jeweils einer der drei Richtungen zusammenfallenden Achsen des Koordinatensystems 100 so ausgerichtet sind, dass die X-Achse als erste Achse, die Y-Achse als zweite Achse und die Z-Achse als dritte Achse zusammen mit dem Ursprung 0/0/0 das Koordinatensystem 100 als rechtshändiges kartesisches Koordinatensystem definieren.

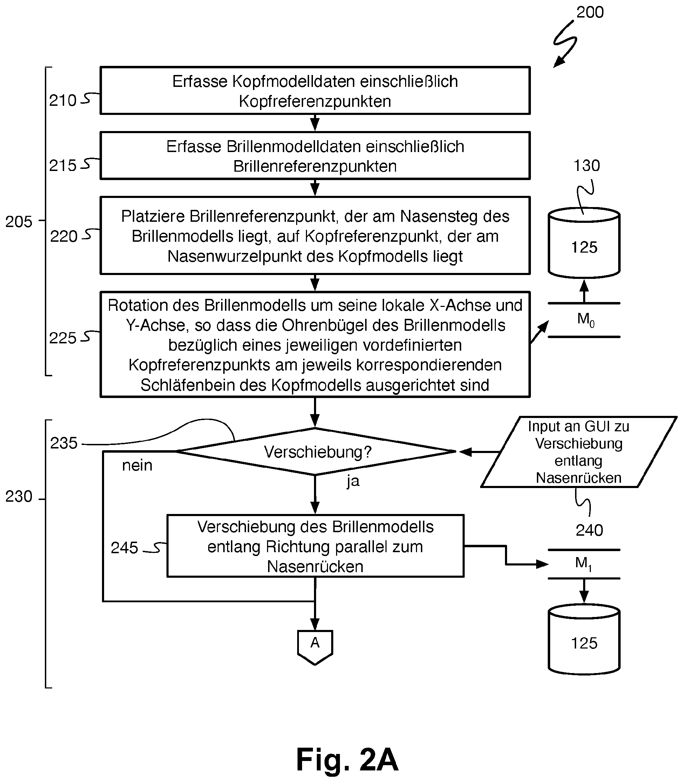

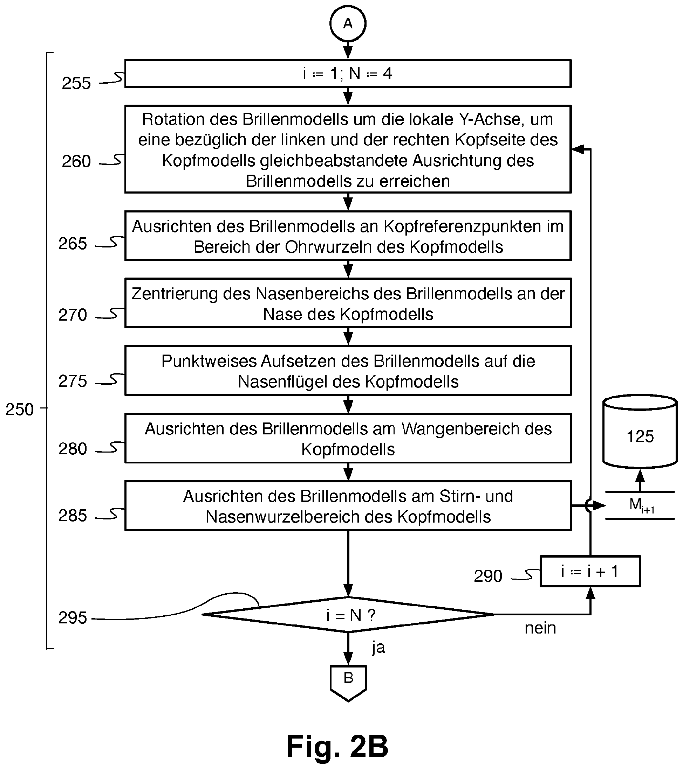

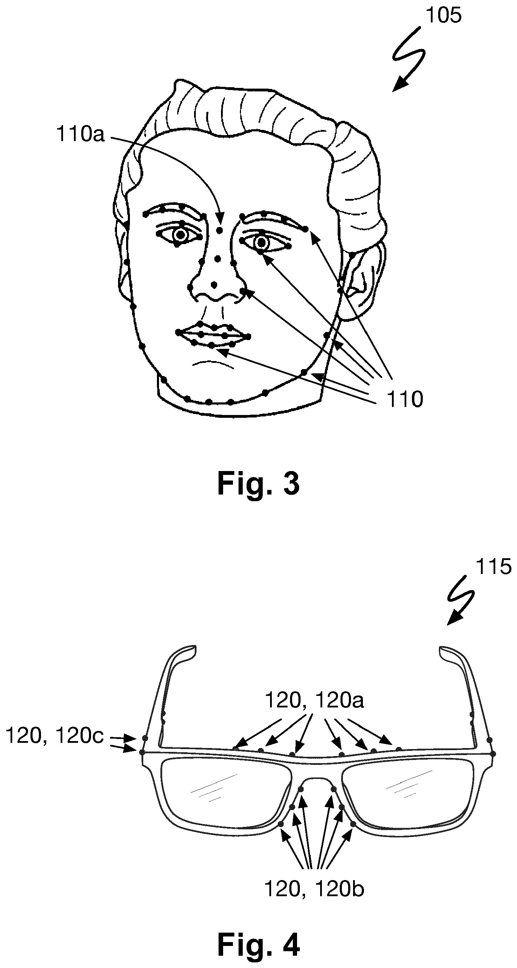

Die drei über Konnektoren "A" und "B" verbundenen Flussdiagramme aus den **Figuren 2A****,** **2B** **und 3C** illustrieren zusammen eine beispielhafte Ausführungsform 200 eines erfindungsgemäßen Verfahrens zur virtuellen Voraussage eines realen Sitzes eines realen Brillengestells bestimmte Gestellgeometrie am Kopf einer Person mit individueller Kopfgeometrie.

Das Verfahren 200 untergliedert sich dabei in mehrere Verfahrensabschnitte 205, 230, 250, 300 und 320.

Der in **Fig. 2A** illustrierte erste Verfahrensabschnitt 205 dient einerseits dazu, Daten zu gewinnen, welche die im weiteren Verfahrensverlauf benötigten Modelle einerseits des realen Brillengestells und andererseits des Kopfes, bzw. genauer der Kopfgeometrie, der Person repräsentieren. Andererseits dient er zur initialen Positionierung ("Grobpositionierung") des Modells des Brillengestells am Modell des Kopfes.

Im Hinblick auf das Gewinnen der genannten Daten werden im Schritt 210 Kopfmodelldaten erfasst, die ein Modell des Kopfes bzw. der Kopfgeometrie der Person, insbesondere als Polygonmodell, repräsentieren. Dieses Modell wird im Folgenden übereinstimmend mit Fig. 1 als "Kopfmodell" 105 bezeichnet. Die Kopfmodelldaten repräsentieren zudem eine Menge von an dem Kopfmodell 105 vordefinierten initialen Kopfreferenzpunkten 110, wobei sich um Punkte handelt, die an Stellen des Kopfmodells 105 liegen, die für das virtuelle Platzieren des Brillenmodells 115 relativ zu dem Kopfmodell 105 besonders relevant sind. Dies ist beispielhaft genauer in Fig. 3 illustriert, wobei hier aufgrund ihrer späteren räumlichen Nähe zum Brillenmodell 115 besonders solche Kopfreferenzpunkte 110 von hoher Relevanz sind, die sich an den Augen, den Augenbrauen, den Ohren und der Nase des Kopfmodells befinden. Insbesondere kann einer der Kopfreferenzpunkte 110a an der Nasenwurzel des Kopfmodells 105, insbesondere darauf zentriert, liegen (sog. "Nasenwurzelpunkt"). Weitere hilfreiche Kopfreferenzpunkte 110 können sich jedoch insbesondere auch am Mund, am Kiefer, der Stirn oder dem Schläfenbein des Kopfmodells 105 befinden.

Im weiteren Schritt 215 werden Brillenmodelldaten erfasst, die ein Modell des Brillengestells, insbesondere als Polygonmodell, repräsentieren. Dieses Modell wird im Folgenden übereinstimmend mit Fig. 1 als "Brillenmodell" 115 bezeichnet. Die Brillenmodelldaten repräsentieren zudem eine Menge von an dem Brillenmodell 115 vordefinierten Brillenreferenzpunkten 120, wobei es sich um Punkte handelt, die an Stellen des Brillenmodells 115 liegen, die für das virtuelle Platzieren des Brillenmodells 115 relativ zu dem Kopfmodell 105 besonders relevant sind. Wie in Fig. 4 illustriert, können die Brillenreferenzpunkte 120 insbesondere gruppenweise angeordnet sein.

Eine erste Gruppe 120a von Brillenreferenzpunkten 120 kann beispielsweise an einer durch eine obere hintere Fassungsrahmenkante definierten Leitkurve des Brillenmodells 115 liegen, welche, wenn das Brillenmodell 115 am Kopfmodell 105 platziert ist, dem Kopfmodell 105 zugewandt liegt. Die Leitkurve kann insbesondere einem die Kante definierenden Polygonzug des Brillenmodells 115 entsprechen, wenn dieses als Polygonmodell definiert ist.

Eine zweite Gruppe 120b von Brillenreferenzpunkten 120 kann beispielsweise an einer unteren Kante, insbesondere einer unteren Leitkurve, des Brillenmodells 115 in einem Bereich liegen, der dazu vorgesehen ist an der Nase des Kopfmodells 105 aufzulegen oder diese zumindest abschnittsweise zu umfassen. Dieser Bereich wird nachfolgend auch als "Nasenbereich" bezeichnet. Diese untere Leitkurve kann wiederum einem diese Kante im Nasenbereich definierenden Polygonzug des Brillenmodells 115 entsprechen.

Eine dritte Gruppe 120c von Brillenreferenzpunkten 120 kann beispielsweise jeweils an den beiden Ohrenbügeln des Brillenmodells 115 liegen, insbesondere in der Nähe von deren Ansatz an einem die beiden Brillengläserfassungen aufweisenden Frontteil des Brillenmodells.

Innerhalb jeder der Gruppen 120a bis 120c können die Brillenreferenzpunkte der jeweiligen Gruppe 120a bis 120c, oder einer jeweiligen Untermenge davon, jeweils gleichbeabstandet liegen. Um eine gute Genauigkeit für die Platzierung des Brillenmodells 115 am Kopfmodell im Rahmen des Verfahrens 200 zu erhalten, ist es günstig, wenn zumindest jede der Gruppen 120a und 120b zumindest sechs Brillenreferenzpunkte aufweist. Insbesondere ist eine Anzahl zwischen 6 und 15 Brillenreferenzpunkten für jede dieser beiden Gruppen, optional auch für die Gruppe 120c, im Hinblick auf einerseits ausreichende Genauigkeit und andererseits eine effiziente Verfahrensdurchführung günstig.

Das Erfassen der Kopfmodelldaten und/oder der Brillenmodelldaten kann auf verschiedene Weise erfolgen. Einerseits können diese Daten bereits vor Beginn des Verfahrens 200 existieren, sodass sie in den Schritten 210 bzw. 215 nur noch für das Verfahren 200 bereitgestellt werden müssen, was insbesondere durch Einlesen aus einem Speicher oder Empfangen eines Datenstroms über eine Datenverbindung, beispielsweise von einem Server, erfolgen kann. Andererseits kann es jedoch auch der Fall sein, dass die Kopfmodelldaten bzw. die Brillenmodelldaten erst im Rahmen des Verfahrens 200 selbst generiert werden. Dies kann insbesondere mittels 3D-Scan des realen Kopfes der Person bzw. des realen Brillengestells erfolgen. Derartige 3D-Scanverfahren sind dem Fachmann bekannt, insbesondere kann dazu auch eine Technik verwendet werden, die im Rahmen der Authentifizierung beziehungsweise Entsperrung von Smartphones, insbesondere von moderneren Versionen des iPhone^{®} (z.B. iPhone 13) von Apple, Inc. bekannt ist. Soweit das Verfahren 200 von einer Datenverarbeitungsvorrichtung durchgeführt wird, kann diese somit konfiguriert sein, entsprechende Ausgangsdaten einer 3D-Scannvorrichtung zu empfangen und möglicherweise auch zuvor ein Signal auszugeben, mit welchem die 3D-Scannvorrichtung veranlasst werden kann, den jeweiligen 3D-Scan auszuführen.

Des Weiteren kann das Erfassen der Kopfmodelldaten bzw. der Brillenmodelldaten ein Erzeugen von Metadaten bezüglich des Kopfmodells bzw. des Brillenmodells enthalten. Solche Metadaten können sich insbesondere, wie schon vorausgehend erwähnt, auf die Definition von initialen Kopfreferenzpunkten 110 bzw. Brillenreferenzpunkten 120 beziehen. Dazu können insbesondere auch Segmentierungsverfahren verwendet werden, beispielsweise im Hinblick auf das Kopfmodell solche Verfahren, die verschiedene Körperregionen am Kopfmodell, wie beispielsweise Augen, Mund, Nase usw. automatisch identifizieren, und darauf beruhend Kopfreferenzpunkte insbesondere in bestimmten ausgewählten bzw. vorbestimmten dieser Körperregionen definieren. Dies kann insbesondere auf Basis einer segmentweisen Analyse einer 3D-Mesh Geometrie des Kopfmodells beruhen, wozu insbesondere Splines definiert, Ableitungen für Krümmungen usw. bestimmt werden können, um darauf beruhend besonders geeignete initiale Kopfreferenzpunkte zu identifizieren, beispielsweise an Extrema, Wendepunkten oder Sattelpunkten auf der Oberfläche des Kopfmodells. Es ist auch denkbar, solche initialen Kopfreferenzpunkte auf Basis einer Bildtextur (insbesondere Fototextur) zu bestimmen und sie mittels einer Transformation von der 2D-Bildtextur auf das dreidimensionale Kopfmodell zu übertragen. Die initialen Kopfreferenzpunkte müssen dabei folglich keinesfalls gleichverteilt über das Kopfmodell liegen. Vielmehr ist es sinnvoll an für die Passform eines Brillengestells am Kopf eines Brillenträgers typischerweise besonders relevante Abschnittes des Kopfmodells, wie etwa dessen Ohren- und Nasenbereiche, mit einer höheren Dichte von initialen Kopfreferenzpunkte zu versehen, als weniger relevante Bereiche, etwa im unteren Wangenbereich.

Grundsätzlich ist dasselbe Vorgehen auch im Hinblick auf das Brillenmodell möglich. Allerdings ist es dort auch möglich, geeignete Brillenreferenzpunkte 120 bereits im Rahmen des Designs des Brillengestells manuell zu definieren und als Metadaten den Brillenmodelldaten hinzuzufügen.

Das Verfahren 200 beruht insgesamt insbesondere auf einer Kollisionserkennung bezüglich möglicher Kollisionen des Brillenmodells 115 mit dem Kopfmodell 105 und dem Beseitigen oder zumindest Minimieren solchen Kollisionen durch virtuelle Anpassung der Platzierung des Brillenmodells 115 am Kopfmodell 105. Anders als bei bekannten Kollisionserkennungsverfahren, wie sie beispielsweise aus dem Bereich der Programmierung von Videospielen bekannt sind und wo regelmäßig an einem 3D-Modell verankerte einfache geometrische Primitive, wie etwa virtuelle Boxen, Kugeln oder Zylinder als "Hit Boxen" verwendet werden und die Kollision dieser Primitive erkannt wird, beruht das Verfahren 200 diesbezüglich allein auf der Verwendung von Referenzpunkten, d.h. einerseits Kopfreferenzpunkten und andererseits den Brillenreferenzpunkten 120 sowie deren Positionierung relativ zueinander. Die Brillenreferenzpunkte 120 sind idealerweise strategisch vor allem so positioniert, dass Sie an den Stellen des Brillenmodells 115 vorkommen, an denen potenzielle Kollisionen mit dem Kopfmodell 105 (und entsprechend zwischen dem modellierten realen Brillengestell und dem realen -Kopf der Person) auftreten können oder jedenfalls besonders wahrscheinlich sind.

Nun wieder bezugnehmend auf **Fig. 2A** und insbesondere den Verfahrensabschnitt 205 davon, weist dieser einen weiteren Schritt 220 auf, in dem ein Brillenreferenzpunkt 120, insbesondere ein Brillenreferenzpunkt 120b, der am Nasensteg des Brillenmodells liegt, und insbesondere dem Ursprung 0/0/0 gemäß Fig. 1 entsprechen kann, auf einem korrespondierenden initialen Kopfreferenzpunkt 110 an der Nase des Kopfmodells 105, insbesondere auf dem Nasenwurzelpunkt 110a, platziert wird.

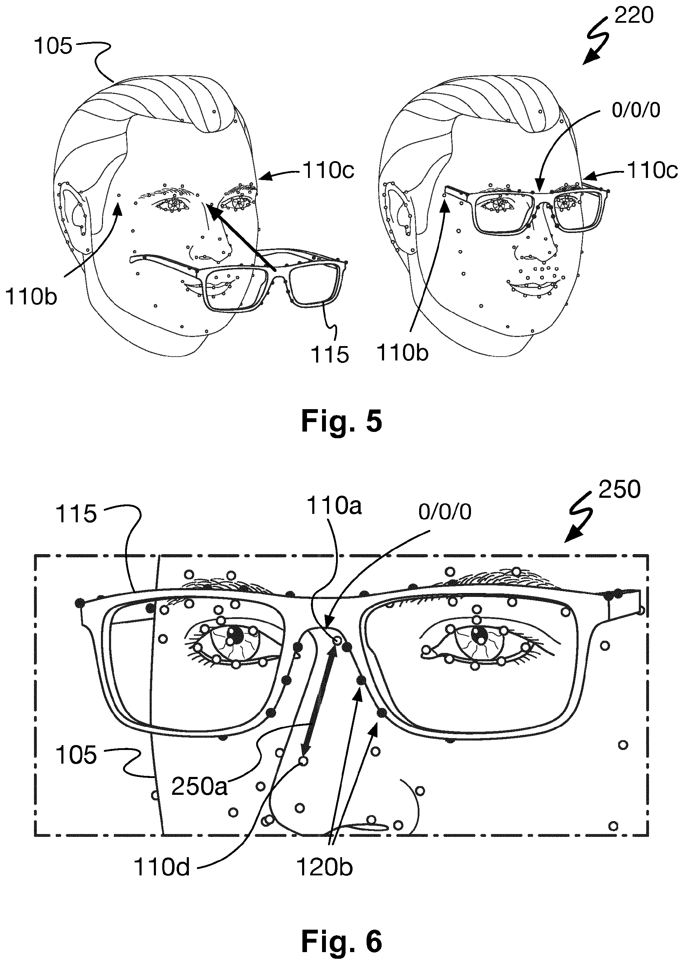

Um ausgehend von dieser Platzierung auch eine initiale Orientierung des Brillenmodells 115 festzulegen, ist im Rahmen des Verfahrensabschnitts 205 auch ein Schritt 225 vorgesehen, bei dem das Brillenmodell 115 so ausgerichtet wird, insbesondere um seine lokale X-Achse und seine lokale Y-Achse rotiert wird, dass zumindest einer, bevorzugt jeder, der Ohrenbügel des Brillenmodells 115 an der ihm jeweils zugeordneten Seite des Kopfmodells an einem korrespondierenden ausgewählten initialen Kopfreferenzpunkt 110b bzw. 110c am Schläfenbein ausgerichtet ist, insbesondere durch oder über diesen hinweg verläuft. Die Schritte 220 und 225 für die initialen (Grob-)platzierung bzw. (Grob-)ausrichtung, die einen ersten Platzierungsschritt des Verfahrens 200 bildet, sind zusätzlich in **Fig. 5** illustriert.

Die aus den Schritten 220 und 225 resultierenden translatorischen bzw. rotatorischen Transformationen können nun zusammengefasst insbesondere in einer entsprechenden ersten Transformationsmatrix M₀, welche die aus diesen Transformationen resultierende initiale Platzierung des Brillenmodells 115 am Kopfmodell 105 repräsentiert, parametrisiert abgelegt und in einem Speicher 125 zur späteren Verwendung zwischengespeichert werden.

In einem zweiten, ebenfalls in **Fig. 2A** illustrierten, optionalen Verfahrensabschnitt 230, der hier auch als "Verschiebungsprozess" bezeichnet ist, wird zunächst in einem Schritt 235 geprüft, ob gemäß einer Benutzereingabe 240 an einer, insbesondere grafischen, Benutzerschnittstelle (GUI) eine virtuelle Verschiebung des Brillenmodells 110 am Kopfmodell 105 benutzerseitig gewünscht ist. Ist dies der Fall (235 - ja), so findet in einem Schritt 245 eine der Benutzereingabe 240 entsprechende virtuelle Verschiebung (Translation) des Brillenmodells 110 entlang einer parallel zum Nasenrücken des Kopfmodells 105 verlaufenden Translationsrichtung 250a, insbesondere in Richtung zu einem Kopfreferenzpunkt 110d am Nasenrücken im Bereich der Nasenspitze hin, statt. Andernfalls (235 - nein) entfällt Schritt 245. Der Schritt 245 ist genauer in **Fig. 6** illustriert. Die gegebenenfalls aus dem Schritt 245 resultierende translatorische Transformation kann nun insbesondere in einer entsprechenden zweiten Transformationsmatrix M₁, welche diese Transformation repräsentiert, parametrisiert abgelegt und in einem Speicher, insbesondere wiederum in dem Speicher 125, zur späteren Verwendung zwischengespeichert werden.

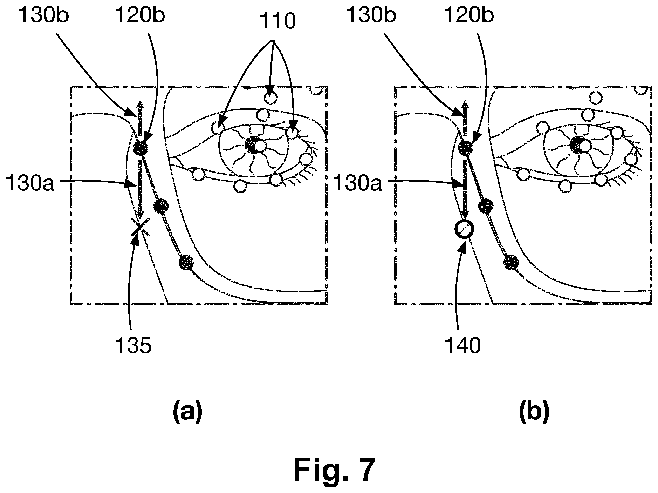

Als ein in **Fig. 2B** illustrierter dritter Verfahrensabschnitt 250 des Verfahrens 200 folgt nun eine iterative Feinanpassung der Platzierung des Brillenmodells 115 am Kopfmodell 105. Der dritte Verfahrensabschnitt 250 ist eine beispielhafte Ausführung des o.g. Anpassungsprozesses und jeder Iterationsdurchlauf entspricht dabei einem beispielhaften o.g. weiteren Platzierungsschritt dieses Anpassungsprozesses. Der dritter Verfahrensabschnitt bzw. Anpassungsprozess 250 beruht insbesondere auf einer Verwendung von Raycasting, die nun zunächst unter Bezugnahme auf **Fig. 7** genauer erläutert werden soll, bevor die einzelnen Schritte des Anpassungsprozesses 250 im Einzelnen behandelt werden.

Nach der Ausführung des ersten Verfahrensabschnitts 205 und gegebenenfalls des zweiten Verfahrensabschnitts 230 sind die grobe Positionierung und Orientierung des Brillenmodells 115 relativ zum Kopfmodell 115 bekannt. Dadurch können bereits bestimmte Annahmen getroffen werden, wie zum Beispiel die Annahme, dass sich die Brillenreferenzpunkte 120b des Nasenbereichs des Brillenmodells 115 in der Nähe des Nasenbereichs des Kopfmodells 105 befinden. Dies erlaubt es, gezielt zusätzliche Kopfreferenzpunkte 140 festzulegen, die zu den bereits in den Kopfmodelldaten definierten Kopfreferenzpunkten 110 hinzukommen. Dementsprechend werden im Rahmen des Anpassungsprozesses 250 auch oder sogar vor allem diese zusätzlichen Kopfreferenzpunkte 140 verwendet, so dass relevante Aspekte der Geometrie des Kopfmodells 105 in größerem Detail miteinbezogen werden können, ohne dass dabei jedoch das gesamte Kopfmodell 105 mit seiner viel höheren Komplexität verwendet werden muss. Stattdessen beruht der Anpassungsprozess auch weiterhin nur auf Kopfreferenzpunkten 110 bzw. 140 einerseits und den Brillenreferenzpunkten 120 andererseits. So lässt sich die gewünschte hohe Effizienz erhalten und zugleich eine hohe Anpassungsgenauigkeit beim Platzieren des Brillenmodells 115 am Kopfmodell 105 erzielen.

Bei der Berechnung der jeweiligen Transformation(en) in den einzelnen Schritten 260 bis 285 des Anpassungsprozesses 250 werden jedem Brillenreferenzpunkt 120, der für den jeweiligen Schritt miteinbezogen wird, ein oder mehrere entsprechende Kopfreferenzpunkte, insbesondere zusätzliche Kopfreferenzpunkte 140 zugeordnet. Die zusätzliche Kopfreferenzpunkte 140 werden nach Bedarf ausgehend vom jeweiligen Brillenreferenzpunkt 120 mittels Raycasting ermittelt. Raycasting ist eine altbekannte Methode und ein weitverbreitetes Verfahren, das in vielen interaktiven 3D-Umgebungen bereits als Tool zur Verfügung steht.

In **Fig. 7** ist ein solcher Raycasting-Prozess exemplarisch illustriert. Dabei werden von einem Brillenreferenzpunkt 120 aus immer zwei Raycastings ausgeführt und zwar zum einen mittels eines ersten virtuellen Strahls 130a in eine definierte Richtung und zum anderen mittels eines zweiten virtuellen Strahls 130b in die dazu entgegengesetzte Richtung, wobei diese Richtungen jeweils durch einen entsprechenden Richtungsvektor beschrieben werden können.

Durch die mittels der Grobpositionierung im ersten Verfahrensabschnitt 205 definierte initiale Platzierung des Brillenmodells 115 am Kopfmodell 105 bedingt, werden die Richtungen der (virtuellen) Strahlen 130a und 130b jeweils so festgelegt, dass sie einerseits hin zum Kopfmodell (vgl. Strahl 130a) und andererseits davon weg (vgl. Strahl 130b) zeigen.

In manchen der Schritte 260 bis 285 können einer oder mehrere der Brillenreferenzpunkte 120 jeweils als Ausgangspunkt für ein Mehrzahl von Raycastings in verschiedene Richtungen dienen.

Fig. 7 zeigt hierzu exemplarisch einen Schritt der Feinpositionierung im Rahmen des Anpassungsprozesses 250 bei dem erreicht werden soll, dass der Nasenbereich des Brillenmodells 125 auf den Nasenflügeln der Nase des Kopfmodells 105 aufliegt.

Für jeden einer Menge von Brillenreferenzpunkten 120b im Nasenbereich des Brillenmodells 115 sind in diesem Prozessschritt jeweils zwei lokale Richtungsvektoren für die Strahlen 130a bzw. 130b definiert. In diesem Beispiel zeigen diese lokalen Richtungsvektoren insbesondere einerseits entlang der Y-Achse (Strahl 130b) und andererseits in entgegengesetzter Richtung (Strahl 130b). Das Ausführen von jeweils zwei Raycastings pro Brillenreferenzpunkt 120 der Menge ist nötig, da ein Brillenreferenzpunkt 120 zunächst grundsätzlich auch innerhalb oder außerhalb des durch die Oberfläche des Kopfmodells 105 definierten Volumens liegen kann. Durch zwei Raycastings wird die jeweilige relative Lage des jeweiligen Brillenreferenzpunkts 120 bezüglich des Kopfmodells 105 (innerhalb, außerhalb oder der Kopfoberfläche) bestimmbar. Je nachdem welcher Strahl einen Treffer auf der Oberfläche des Kopfmodells 105 erzielt hat, liegt der Brillenreferenzpunkts 120 innerhalb oder außerhalb des Kopfmodells.

Befindet sich zum Beispiel ein hier exemplarisch betrachteter Brillenreferenzpunkt 120b unterhalb der eine Nase des Kopfmodells modellierenden Oberfläche des Kopfmodells, d.h. innerhalb der Nasengeometrie, so wird eine Kollision festgestellt und es müssen die Brillenreferenzpunkte 120 und später darauf beruhend das gesamte Brillenmodell so transformiert werden, dass diese Kollision aufgelöst wird. Wenn sich andererseits, alle Brillenreferenzpunkte 120 außerhalb des Nasenbereichs des Kopfmodels befinden, dann müssen Brillenreferenzpunkte 120 und folglich das Brillenmodell 115 als Ganzes in einer Richtung zum Nasenbereich hin transformiert werden, damit das Brillenmodell 115 im Nasenbereich auf den Nasenflügeln des Kopfmodells 105 aufliegt.

An der Stelle 135, an der ein Raycasting-Strahl, im vorliegenden Beispiel der Strahl 130a, das Kopfmodell 105 schneidet (**Fig. 7** **(a)**) wird ad hoc, insbesondere temporär, ein zusätzlicher Kopfreferenzpunkt 140 des Kopfmodells 105 erzeugt (**Fig. 7** **(b)**). Für den aktuellen Schritt des Anpassungsprozesses 250 wird der als Ausgangspunkt des Raycastings genutzte Brillenreferenzpunkte 120b dem soeben neu bestimmten zusätzlichen Kopfreferenzpunkt 140 zum Zweck der Berechnung der Transformation dieses aktuellen Schritts zugeordnet. Nachdem der aktuellen Schritt abgeschlossen ist und die zugehörige Transformation somit bestimmt und gespeichert ist, kann der zuvor für diesen Schritt ermittelte zusätzliche Kopfreferenzpunkt 140 verworfen werden und mit dem nächsten Schritt fortgefahren werden.

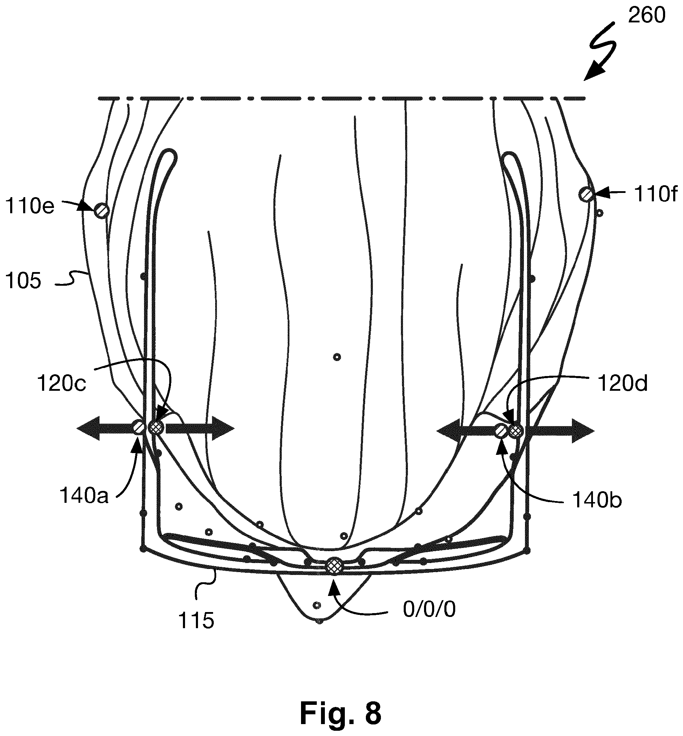

Nun werden im Folgenden unter Bezugnahme auf **Fig. 2B** und die **Figuren 8 bis 12** die einzelnen Schritte des Anpassungsprozesses 250 im Einzelnen erläutert.

Zur Steuerung der im Anpassungsprozess 250 vorgesehenen Iteration kann zunächst in einem Schritt 255 ein Iterationszähler i initialisiert werden, beispielsweise mit dem Wert "1". Sodann folgt eine Iterationsschleife, die so oft durchlaufen wird, bis ein vorbestimmtes Abbruchkriterium erreicht ist. Im vorliegenden Beispiel ist, wie in den Schritten 290 und 295 dargestellt, als Abbruchkriterium das Erreichen einer auch im Schritt 255 vorgegebenen Anzahl N (hier beispielhaft N=4) von Iterationsdurchläufen vorgesehen. Alternativ könnte man insbesondere auch ein Abbruchkriterium vorsehen, dass in Abhängigkeit von einem erreichten Grad der Anpassung des Sitzes des Brillenmodells 115 am Kopfmodell 105 definiert ist.

Im Rahmen der Iteration im Anpassungsprozess 250 werden je Iterationsdurchlauf nacheinander die Schritte 260 bis 295 ausgeführt.

Im Schritt 260, der genauer in **Fig. 8** illustriert ist, erfolgt eine Rotation des Brillenmodells 115 um die lokale Y-Achse (senkrecht zur Bildebene durch einen Punkt im Zentrum des Nasenstegs des Brillenmodells 115, der insbesondere mit dem Koordinatenursprung 0/0/0 zusammenfallen kann, wie hier illustriert), um eine bezüglich der linken und der rechten Kopfseite des Kopfmodells 105 gleichbeabstandete Ausrichtung des Brillenmodells 115 zu erreichen.

Um den Drehwinkel für diese Rotation zu bestimmen, werden von jeweiligen Brillenreferenzpunkten 120c und 120d an den beiden Ohrenbügeln des Brillenmodells 115 aus Raycastings in den Schläfenbereich des Kopfmodells 105 durchgeführt. Dadurch ergeben sich dort Auftreffpunkte der als dicke Pfeile dargestellten Strahlen am Kopfmodell 105, and denen ad hoc zusätzliche Kopfreferenzpunkte 140a bzw. 140b neu definiert werden. Zusätzlich können bereits existierende Kopfreferenzpunkte 110e und 110f an den beiden Ohren des Kopfmodells 105 herangezogen werden. Mit Hilfe der neu gefundenen zusätzlichen Kopfreferenzpunkte 140a und 140b an den Schläfen und den bereits existierenden Kopfreferenzpunkten 110e und 110f kann nun der Drehwinkel für die Rotation mit dem Anpassungsziel ermittelt werden, dass die Ohrenbügel, d.h. genauer die des Brillenmodells auf der linken und rechten Kopfhälfte des Kopfmodells jeweils denselben Abstand zu Ohren und Schläfen aufweisen. Genauer bedeutet dies, dass zum einen die Brillenreferenzpunkte 120c und 120d an den beiden Ohrenbügeln, jeweils zu ihrem zugeordneten Kopfreferenzpunkt 110e bzw. 110f an den Ohren denselben Abstand aufweisen und dass zum anderen die Brillenreferenzpunkte 120c und 120d zu den beiden zusätzlichen Kopfreferenzpunkten 140a und 140b an den Schläfen denselben Abstand aufweisen, jeweils in einer vom jeweiligen Kopfreferenzpunkt vom Kopfmodell wegzeigenden Richtung.

Wie aus Fig. 8 zu entnehmen ist, ist zu Beginn des Schritts 260 dieses Anpassungsziel noch nicht erreicht. Vielmehr liegt der Brillenreferenzpunkt 120c innerhalb des Kopfmodells 105 (negativer Abstand) während der Brillenreferenzpunkt 120d außerhalb des Kopfmodells 105 liegt (negativer Abstand). Nach Ausführung von Schritt 260 soll sich dagegen eine diesbezügliche symmetrische Situation eingestellt haben, bei der die beiden Brillenreferenzpunkte 120c und 120d jeweils außerhalb oder auf dem Kopfmodell (bzw. dessen Oberfläche) liegen und diesbezüglich denselben Abstand entlang der Strahlrichtung des jeweiligen Raycastings in Richtung des Kopfmodells 105 aufweisen.

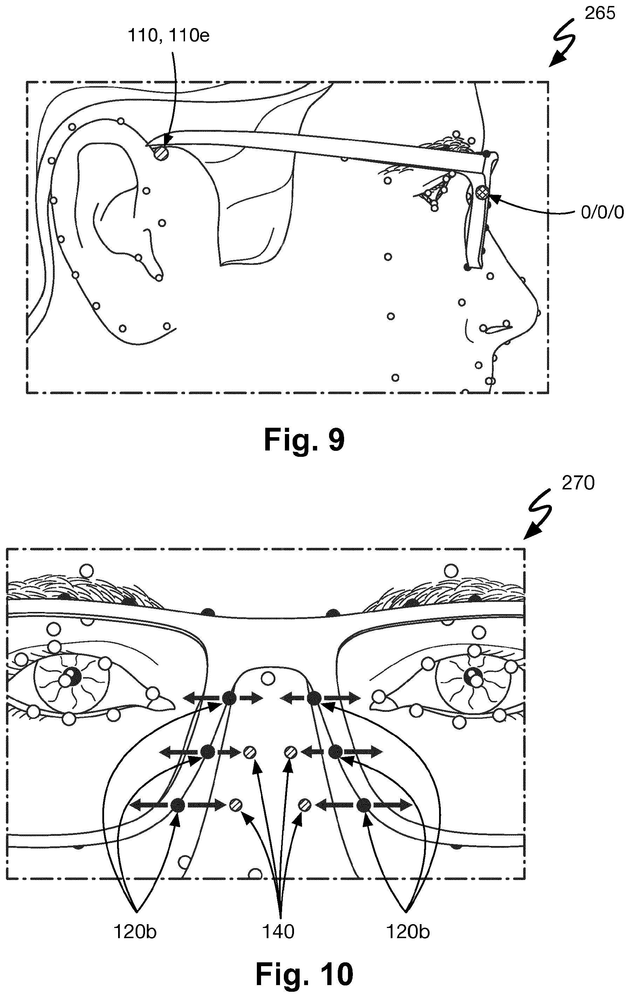

Im weiteren, in **Fig. 9** genauer illustrierten, Schritt 265 des Anpassungsprozesses 250 erfolgt eine Rotationstransformation in Abhängigkeit von der relativen Lage eines Kopfreferenzpunkts 110 an einem Ohr des Kopfmodels 105, der insbesondere mit dem Ohrwurzelpunkt 110e zusammenfallen kann, zu einem korrespondierenden Brillenreferenzpunkt 120 an einem dem Ohr zugeordneten Ohrenbügel des Brillenmodels 115, um als Anpassungsziel eine Platzierung des Brillenmodells am Kopfmodell zu erreichen, bei welcher der Ohrenbügel auf der Ohrwurzel des Ohrs aufliegt.

Dieser Schritt 265 kann sich insbesondere auch nur auf initiale Kopfreferenzpunkte 120 stützen. Zu diesen initialen Kopfreferenzpunkten 120 können insbesondere Kopfreferenzpunkte auf der linken und rechten Seite des Kopfmodells, insbesondere wiederum die Ohrenwurzelpunkte 110e und 110f gehören. Zudem wird ein Brillenreferenzpunkt am Nasensteg des Brillenmodells, der insbesondere wieder mit dem Koordinatenursprung 0/0/0 des lokalen Koordinatensystems zusammenfallen kann verwendet. Das Brillenmodell 115 wird nun mittels Drehungen um die lokalen X-Achse und/oder die lokale Z-Achse mit dem Brillenreferenzpunkt am Nasensteg als Drehpunkt rotiert, so dass die Ohrenbügel auf der linken und rechten Kopfmodell- bzw. Brillenmodellseite jeweils auf dem dazu korrespondierenden linken bzw. rechten Kopfmodellpunkt (insbesondere dem Ohrwurzelpunkt 110e bzw. 110f) am entsprechenden Ohr des Kopfmodells 105 aufliegen.

Im weiteren, in **Fig. 10** genauer illustrierten, Schritt 270 des Anpassungsprozesses 250 erfolgt eine Zentrierung des Nasenbereichs des Brillenmodells 115 in horizontaler Richtung, d. h. entlang der X-Richtung, relativ zur Nase des Kopfmodells 105. Dazu werden ausgehend von den Brillenreferenzpunkten 120b im Nasenbereich des Brillenmodells 115 Raycastings parallel zur X-Achse des lokalen Koordinatensystem 100 des Brillenmodells 115 ausgeführt. Dabei werden an den Auftreffpunkten der Raycasting-Strahlen am Kopfmodell 105 neue zusätzliche Kopfreferenzpunkte 140 im Nasenbereich des Kopfmodells 105 erzeugt. Im konkreten Beispiel der Fig. 10 werden von sechs Brillenreferenzpunkten 120b ausgehend 12 Raycastings ausgeführt. Insgesamt werden dabei im vorliegenden Beispiel vier zusätzliche Kopfreferenzpunkte 140 auf dem Nasenrücken temporär identifiziert. Die Raycastings zu den beiden oberen Referenzpunkten führen dagegen hier zu keinen weiteren zusätzlichen Referenzpunkten 140, weil dabei keine Treffer auf dem Kopfmodell 105 auftreten.

Die jeweiligen Abstände zwischen den Brillenreferenzpunkten 120b einerseits und den entsprechenden, neu gefundenen Kopfreferenzpunkten 140 im Nasenbereich des Kopfmodells 105 werden dazu verwendet, die Abstände zwischen dem Brillenmodell 115 und der Nase im Nasenbereich des Kopfmodells 105 auf der linken und rechten Nasenseite zu vereinheitlichen. Die dazu benötigte Transformation ist eine Rotation um die Y-Achse. Während in Fig. 10 nur Brillenreferenzpunkte 120b im Nasenbereich auf der vorderen unteren Leitkurve des Brillenmodells visualisiert sind, sind für eine möglichst genaue Zentrierung des Brillenmodells 115 am Kopfmodell 105 im Rahmen des Schritts 270 jedoch ebenso weitere, entlang der Richtung der Z-Achse (d.h. senkrecht zur Zeichenebene) verteilt angeordnete weitere Brillenreferenzpunkte an dem Brillenmodell 115, insbesondere an dessen Nasenauflage, vorteilhaft.

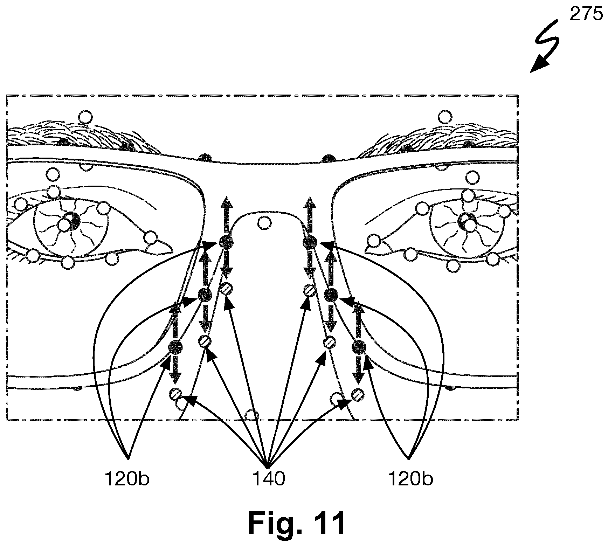

Im weiteren, in **Fig. 11** genauer illustrierten Schritt 275 des Anpassungsprozesses 250 erfolgt eine Anpassung der Lage des Nasenbereichs des Brillenmodells 115 in vertikaler Richtung, d. h. entlang der Y-Richtung, relativ zur Nase des Kopfmodells 105.

Ähnlich wie im vorangegangenen Schritt 270 werden von Brillenreferenzpunkten 120b im Nasenbereich des Brillenmodells aus, insbesondere von denselben Brillenreferenzpunkten 120b wie in Schritt 270, Raycasting-Strahlen ausgesandt. Dies erfolgt jedoch diesmal in vertikaler Richtung, da Schritt 270 das Anpassungsziel verfolgt, das Brillenmodell 115 auf dem Nasenrücken des Kopfmodells 105 aufliegen zu lassen.

Dazu wird zu jedem der Brillenreferenzpunkte 120b sein Abstand zu seinem aufgrund des Raycastings korrespondierenden zusätzlichen Kopfreferenzpunkt 140 auf der Oberfläche des Gesichts des Kopfmodells 105 bestimmt, soweit ein solcher Kopfreferenzpunkt 140 vorhanden ist. Diese Information wird dazu benutzt, den Drehwinkel einer Rotation, um eine zwischen den Ohrwurzelpunkten 110e und 110f verlaufende Drehachse so zu bestimmen, dass nach Durchführung dieser Transformation die Nasenauflage des Brillenmodells auf den Nasenflügeln des Kopfmodells 105 aufliegt. Ebenso wie im vorangegangenen Schritt 270 sind auch in Fig. 11 nur Brillenreferenzpunkte 120b auf der vorderen unteren Leitkurve des Brillenmodells in dessen Nasenbereich dargestellt, während für eine möglichst genaue Positionierung des Brillenmodells 115 am Kopfmodell 105 im Rahmen des Schritts 275 jedoch ebenso weitere, entlang der Richtung der Z-Achse (d.h. senkrecht zur Zeichenebene) verteilt angeordnete weitere Brillenreferenzpunkte an dem Brillenmodell 115, insbesondere an dessen Nasenauflage, vorteilhaft sein können.

Im konkreten Beispiel der Fig. 11 wurden für alle Raycastings zusätzliche Kopfreferenzpunkte im Nasenbereich des Kopfmodells gefunden. Das Brillenmodell 115 muss nun im Rahmen der Transformation zur Nase hin rotiert werden, damit mindestens einer der Brillenreferenzpunkte 120b seinen korrespondierenden zusätzlichen Kopfreferenzpunkt 140 oder dessen nähere Umgebung auf der Nase des Kopfmodells 115 berührt.

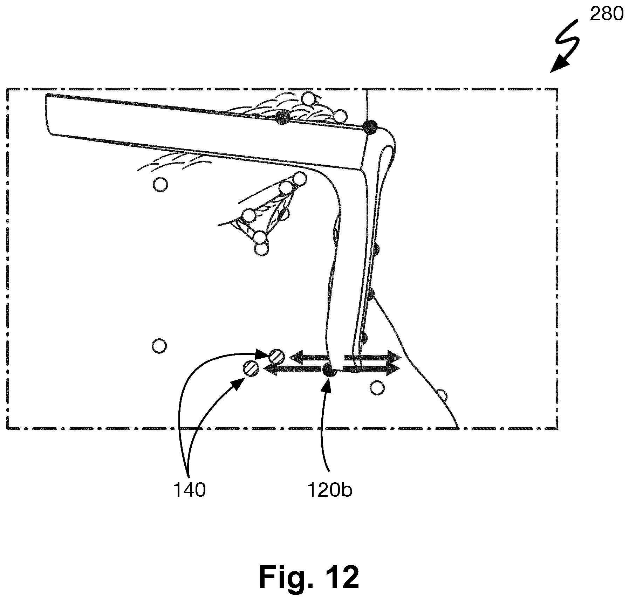

In einem weiteren, in **Fig. 12** genauer illustrierten Schritt 280 des Anpassungsprozesses 250 erfolgt eine Prüfung dahingehend, ob es zwischen den Wangenregionen des Kopfmodells 105 und dem unteren Rahmenbereich des Brillenmodells 115 Kollisionen gibt. Gegebenenfalls erfolgt eine Transformation zur Beseitigung solcher Kollisionen. Bei einer solchen Transformation wird durch eine Rotation um eine durch die an den Ohrwurzeln gelegenen Kopfreferenzpunkte 110e und 110f verlaufende Drehachse das Brillenmodell 115 so gedreht, dass solche Kollisionen im Wangenbereich beseitigt werden. Falls jedoch in der letzten Iteration N des Anpassungsprozesses 250 immer noch derartige Kollisionen festgestellt wurden und das Brillenmodell danach aufgrund der letztmaligen Durchführung des Schritts 280 auf der Wange des Kopfmodells aufliegt, kann optional eine Ausgabe an einer Mensch-Maschine-Schnittstelle initiiert werden, um diesen Umstand zu melden.

Im konkreten Beispiel der Fig. 12 werden zwei zusätzliche Kopfreferenzpunkte im Wangenbereich des Kopfmodells 105 identifiziert. Dadurch wird festgestellt, dass keine Kollision zwischen dem Brillenmodell 115 und dem Wangenbereich vorliegt. Ebenso ist der Abstand zwischen dem Brillenmodell 115 und dem Wangenbereich groß genug dafür, dass in diesem Fall im Schritt 280 keine Transformation ausgeführt werden muss.

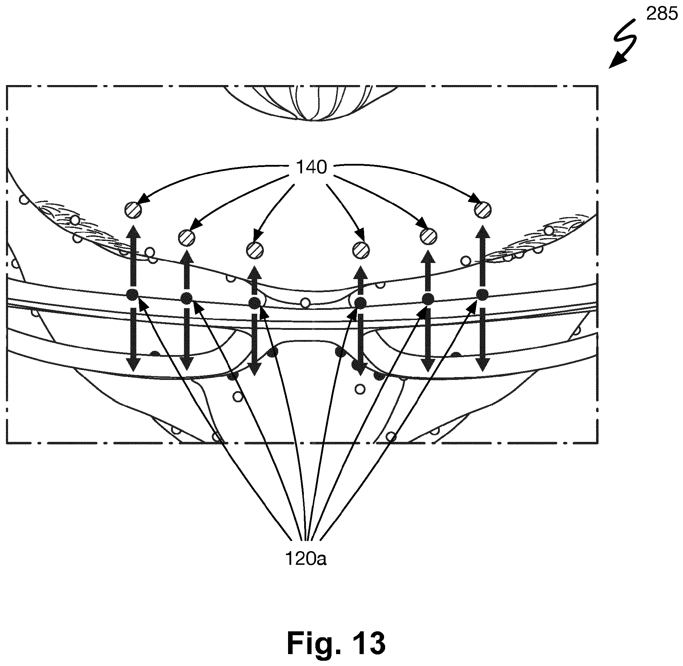

Im in **Fig. 13** genauer illustrierten abschließenden Anpassungsschritt 280 jeder Iteration des Anpassungsprozesses 250 erfolgt wiederum mittels Raycasting eine Prüfung dahingehend, ob es Kollisionen zwischen Brillenreferenzpunkten 120a auf dem oberen Rahmenbereich des Brillenmodells 115 und der Stirn bzw. Nasenwurzel des Kopfmodells gibt. Ist dies der Fall (d.h. wenn zumindest ausweislich des Raycastings einer der Brillenreferenzpunkten 120a auf oder innerhalb des Kopfmodells liegt), dann werden solche Kollisionen durch eine Translationstransformation der Brillenreferenzpunkte in einer von der Stirn wegzeigenden Richtung entlang eines bestimmten Brillenbügelvektors aufgelöst. Der Brillenbügelvektor kann dabei insbesondere so definiert sein oder werden, dass er der Projektion eines sich zwischen den Endpunkten eines Ohrenbügels des Brillenmodells auf die lokale Y/Z-Ebene entspricht.

Selbst dann, wenn keine solche Kollisionen festgestellt werden, kann eine solche Translation erfolgen, um einen optimalen Abstand des Brillenmodells von der Stirn einzustellen. Soweit nicht im Verschiebungsprozess 230 etwas anderes bestimmt wurde, kann für die Translation insbesondere angenommen werden, dass das zum Brillenmodell 115 korrespondierende reale Brillengestell optimaler Weise nahe der Stirn oder der Nasenwurzel getragen werden soll. Dementsprechend werden die Brillenreferenzpunkte 120 bei dieser Translation so transformiert, dass dies einer Einstellung eines vordefinierten optimalen Abstands des Brillenmodells 115 zur Stirn bzw. Nasenwurzel entspricht. Im konkreten Beispiel der Fig. 13 existieren zwar keine Kollisionen, es gibt jedoch einen signifikanten Abstand zwischen dem oberen Rahmen des Brillenmodells und der Nasenwurzel des Kopfmodells 105. Daher muss das Brillenmodell translatorisch etwas in Richtung hin zur Nasenwurzel transformiert werden.

Die im Rahmen des Anpassungsprozesses 250 je Iteration definierten einzelnen Transformationen können nun zusammengefasst insbesondere in einer entsprechenden weiteren Transformationsmatrix Mᵢ₊₁ je Iteration i, welche diese Transformationen der i-ten Iteration repräsentiert, parametrisiert abgelegt und in einem Speicher, insbesondere wiederum in dem Speicher 125, zur späteren Verwendung im Rahmen des Verfahrens 200 zwischengespeichert werden.

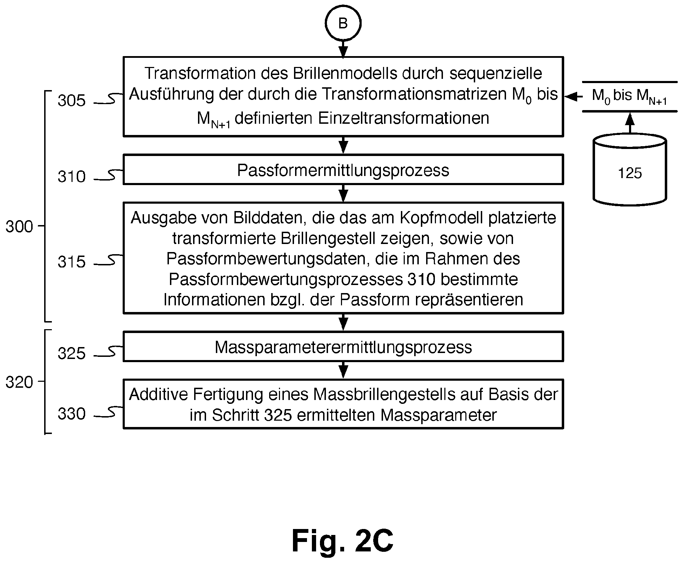

Unter Bezugnahme auf **Fig. 2C** wird nun ein dritter Verfahrensabschnitt 300 des Verfahrens 200 beschrieben, der ein Generieren und Ausgeben von Vorhersageinformationen zur Vorhersage des realen Sitzes des zu dem Brillenmodell korrespondierenden realen Brillengestells am realen Kopf der Person betrifft. Der dritte Verfahrensabschnitt 300 baut auf den Ergebnissen der vorangegangenen Prozessschritte, insbesondere des Anpassungsprozesses 250, in dem zum Zwecke der Sitzoptimierung eine Feinpositionierung des Brillenmodells 115 am Kopfmodell 115 vorgenommen wurde, auf.

Zunächst erfolgt im Rahmen des dritten Verfahrensabschnitts 300 in einem Schritt 305 eine Transformation des Brillenmodells 115 als Ganzes, d. h. im Falle eines Polygonmodells sämtlicher Knoten des Polygonmodells. Diese Transformation ergibt sich aus den in den vorangegangenen Verfahrensabschnitten bestimmten und im Speicher 125 abgelegten und nun daraus ausgelesenen Transformationsmatrizen M₀ bis M_{N+1} für die oben beschriebenen Einzeltransformationen, insbesondere durch entsprechende Hintereinanderausführung bzw. eine entsprechende Matrixmultiplikation.

Hier kommt nun ein Vorteil des Verfahrens 200 im Hinblick auf seine Effizienz zum Tragen. Während die bislang beschriebenen Einzeltransformationen in den vorangegangenen Verfahrensschritten nur auf die Menge der Brillenreferenzpunkte 120 angewandt wurde, d. h. auf eine typischerweise sehr begrenzte Anzahl von Punkten, die sinnvollerweise sehr viel geringer gewählt ist, als die Anzahl der Knoten im Polygonmodell der Brille (Brillenmodell), waren diese einzelnen Transformationen sehr schnell, insbesondere in Echtzeit ausführbar. Erst jetzt im Schritt 305, d. h. nach Abschluss der Bestimmung der Transformationsparameter, die sich ergebende Gesamttransformation auf das gesamte Brillenmodell angewandt. Somit muss dieser rechenintensivere Schritt nur ein einziges Mal ausgeführt werden.

Das transformierte Brillenmodell 115 kann nun in einem Schritt 315 in geeigneter Weise mittels es repräsentierender Daten ausgegeben werden, insbesondere grafisch an einer Benutzerschnittstelle, um einen Benutzer des Verfahrens 200 einen optischen Eindruck vom Sitz des Brillenmodells 115 am Kopfmodell 105 und somit eine zuverlässige Voraussage des realen Sitzes des zum Brillenmodell 115 korrespondierenden realen Brillengestells am zum Kopfmodell 105 korrespondierenden realen Kopf der Person zu liefern.

Optional kann des Weiteren ein Passformermittlungsprozess 310 vorgesehen sein, der insbesondere dazu dient, eine insbesondere quantifizierte Vorhersage bezüglich der voraussichtlichen Passform und des voraussichtlichen Tragekomforts des realen Brillengestells am realen Kopf der Person auf Basis von im Rahmen des Verfahrens 200 gesammelten Informationen zu tätigen.

Insbesondere kann im Rahmen des Passformermittlungsprozesses 310 für einen oder jeden Ohrenbügel (i) eine jeweilige Ohrenbügellänge am Brillenmodell 115 zwischen dem Ansatzpunkt des Ohrenbügels am Frontteil des Brillenmodells 115 und dem jeweiligen korrespondierenden Ohrwurzelpunkt berechnet und (ii) der jeweilige Anpressdruck jedes Ohrenbügels des realen Brillengestells auf die zugeordnete Seite des realen Kopfs der Person auf Basis berechneten Ohrenbügellänge, der relativen Lage des Ohrenbügels des Brillenmodells 115 zum Kopfmodell 105 und Informationen, aus denen sich auf eine Federkraft des jeweiligen Ohrenbügels bei gegebener Auslenkung aus einer Ruhelage schließen lässt (z.B. Geometrie- und Materialdaten) zum Ohrenbügel abgeschätzt werden.

Auch ist es möglich, auf Basis des im Rahmen des Anpassungsprozesses neu positionierten Brillenmodells 115 gewisse bezüglich der Passform aussagekräftige Proportionen von Brillenmodell 115 und Kopfmodell 105 zu bestimmen, wie zum Beispiel die Lage des oberen Brillenrahmens des Brillenmodells 115 relativ zu den Augenbrauen am Kopfmodell 105.

Außerdem können während des Anpassungsprozesses 250 bestimmte Informationen, die im Rahmen des Anpassungsprozesses bestimmt wurden, genutzt werden, um auf Aspekte der Passform des Brillenmodells am Kopfmodell 105 bzw. des realen Brillengestells am realen Kopf der Person zu schließen. Zu diesen Informationen können insbesondere im Rahmen von Raycasting bestimmte Abstände oder sich nach Ausführung der jeweiligen Transformationen der Anpassungsschritte ergebende Abstände gehören, beispielsweise, wie viele der Brillenreferenzpunkte 120b im Nasenbereich des Brillenmodells 115 nach Abschluss des Anpassungsprozesses 250 auf dem Nasenbereich des Kopfmodells 105 aufliegen. Stattdessen oder zusätzlich können relative räumliche Lagen, insbesondere anhand von Proportionen, zwischen Brillenreferenzpunkten und Kopfreferenzpunkten berücksichtigt werden. Zum Beispiel kann die Lage von den Pupillen zugeordneten Kopfeferenzpunkten im Verhältnis zu Referenzpunkten am oberen und unteren Brillengestellkanten, aus denen ein Durchblickspunkt für das entsprechende Auge bestimmt werden kann, berücksichtigt werden. Gemäß einem anderen Beispiel kann die relative räumliche Lage von bestimmten Brillenreferenzpunkten Kopfreferenzpunkten, die den Schläfen oder bestimmten (anderen) Konturpunkten des Gesichts zugeordnet sind, berücksichtigt werden, um zu bestimmen, ob die Brillengestellbreite im Verhältnis zur Gesichtsbreite optisch harmonisch wirkt.

Im Falle einer statischen Standardbrille, d.h. keiner Maßbrille, kann zudem eine Ausgabe, insbesondere an einer Benutzerschnittstelle, generiert werden, die eine Information bzgl. der bestimmten Passform liefert, insbesondere dahingehend, ob das zum Brillenmodell 115 korrespondierende reale Brillengestell passen wird oder ob besser ein anderes Brillengestell (insbesondere wiederum mittels VTO) anprobiert bzw. gewählt werden sollte, um eine verbesserte Passform zu erreichen.

Dagegen kann, insbesondere im Falle einer gewünschten Maßbrille, im Verfahren 200 des Weiteren ein vierter Verfahrensabschnitt 320 vorgesehen sein, bei dem zunächst in einem Schritt 325 auf Basis der im dritten Verfahrensabschnitt 300 ermittelten Passforminformationen geeignete Maßparameter für das Brillengestell der Maßbrille ermittelt und nachfolgend in einem weiteren Schritt 330 eine additive Fertigung eines auf diesen Maßparametern Maßbrillengestells ausgelöst, gesteuert oder durchgeführt wird, insbesondere in Abhängigkeit von den entsprechenden Fähigkeiten eines zur Durchführung des Verfahrens 200 verwendeten Systems. Insbesondere können die Maßparameter mit der beispielsweise so bestimmt werden, dass der genannte Anpressdruck der Ohrenbügel am Kopf innerhalb eines vorbestimmten Druckbereichs liegt, der typischerweise für die Person individuell oder allgemein für einen als Referenz definierten "Standardbrillenträger" als zweckmäßig und angenehm anzunehmen ist. Die Länge der Ohrenbügel und etwaiger Knickpunkt darin, kann ebenso maßgerecht bestimmt werden, so dass ein jeweiliger abgeknickter Teil der Ohrenbügel bei korrektem Sitz des Brillengestells am Kopf der Person unmittelbar hinter der Ohrmuschel verläuft.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- 100: Koordinatensystem
- 105: Kopfmodell
- 110: Kopfreferenzpunkte
- 110a: Kopfreferenzpunkt an der Nasenwurzel des Kopfmodells (Nasenwurzelpunkt)
- 110b: Kopfreferenzpunkt am rechten Schläfenbein des Kopfmodells
- 110c: Kopfreferenzpunkt am linken Schläfenbein des Kopfmodells
- 110d: Kopfreferenzpunkt am Nasenrücken des Kopfmodells
- 110e, f: Kopfreferenzpunkte an den Ohren des Kopfmodells, insbesondere Ohrwurzelpunkte
- 115: Brillenmodell
- 120: Brillenreferenzpunkte
- 120a: Brillenreferenzpunkte an einer oberen Leitlinie des Brillenmodells
- 120b: Brillenreferenzpunkte an einer Leitlinie im Nasenbereich des Brillenmodells
- 120c, d: Brillenreferenzpunkte an einem Ohrenbügel des Brillenmodells
- 125: Speicher
- 130a: erster virtueller Strahl im Rahmen von Raycasting, in erste Richtung verlaufend
- 130b: zweiter virtueller Strahl im Rahmen von Raycasting, in Gegenrichtung zur ersten Richtung verlaufend
- 135: Auftreffpunkt eines virtuellen Raycasting-Strahls auf Oberfläche (z.B. Knoten, Kante oder Polygon) des Kopfmodells
- 140: zusätzlicher (ad-hoc) Kopfreferenzpunkt, mittels Raycasting bestimmt
- 140a-b: spezielle zusätzliche (ad-hoc) Kopfreferenzpunkte, mittels Raycasting bestimmt
- 200: Verfahren gemäß einer Ausführungsform der Erfindung
- 200-330: Verfahrensabschnitte bzw. Schritte des Verfahrens 200

## Patentansprüche

1. Verfahren (200) zur virtuellen Voraussage eines realen Sitzes eines realen Brillengestells bestimmter Gestellgeometrie am Kopf einer Person mit individueller Kopfgeometrie, wobei das Verfahren (200) aufweist:
Erfassen von Kopfmodelldaten, die ein dreidimensionales virtuelles Kopfmodell (105) zumindest eines Teils des Kopfes der Person repräsentieren;
Erfassen von Brillenmodelldaten, die ein dreidimensionales virtuelles Brillenmodell (115) zumindest eines Teils der Gestellgeometrie des Brillengestells repräsentieren;
einen ersten Platzierungsschritt, in dem eine Punktmenge aus einer Mehrzahl von durch oder auf Basis der Brillenmodelldaten vordefinierten Brillenreferenzpunkten an dem Brillenmodell (115) relativ zu einer Punktmenge aus einem oder mehreren durch oder auf Basis der Kopfmodelldaten vordefinierten initialen Kopfreferenzpunkten an dem Kopfmodell (105) ausgerichtet wird, um eine initiale virtuelle Platzierung des Brillenmodells (115) am Kopfmodell (105) zu definieren;
einen Anpassungsprozess mit einem oder mehreren dem ersten Platzierungsschritt nachfolgend iterativ ausgeführten weiteren Platzierungsschritten, in denen jeweils mittels Raycasting anhand eines jeweiligen von einem oder mehreren der Brillenreferenzpunkte (120) ausgehenden virtuellen Strahls ein oder mehrere zusätzliche Kopfreferenzpunkte (140) am Kopfmodell (105) bestimmt und zur Ermittlung zumindest eines Parameterwerts einer parametrisierten translatorischen und/oder rotatorischen Transformation der Brillenreferenzpunkte (120) zur Anpassung der virtuellen Platzierung der Brillenreferenzpunkte (120) relativ zum Kopfmodel herangezogen werden und die entsprechend festgelegte Transformation bezüglich der Brillenreferenzpunkte (120) ausgeführt wird; und
Generieren und Ausgeben von Vorhersageinformationen, die auf Basis der sich im Rahmen der Iteration aus der Transformation des zuletzt ausgeführten Platzierungsschritts ergebenden virtuellen Platzierung der Brillenreferenzpunkte (120) relativ zu den Kopfreferenzpunkten eine Voraussage zum realen Sitz des realen Brillengestells am Kopf der Person repräsentieren.

2. Verfahren (200) nach Anspruch 1, wobei:
das Ermitteln der Transformation für den jeweils aktuellen Platzierungsschritt ein Anpassen von zumindest einem Parameter der Transformation in Abhängigkeit von der relativen Lage von zumindest einem der Brillenreferenzpunkte (120) zu zumindest einem der im aktuellen Platzierungsschritt bestimmten zusätzlichen Kopfreferenzpunkte (140) zur Erreichung eines bezüglich dieser Lage definierten Anpassungsziels aufweist.

3. Verfahren (200) nach Anspruch 2, wobei der erste Platzierungsschritt oder zumindest einer der Platzierungsschritte des Anpassungsprozesses des Weiteren aufweist:
Bestimmen von je zumindest einem zusätzlichen Kopfreferenzpunkt (140) auf dem Kopfmodell (105) je Kopfseite mittels Raycasting anhand eines von einem jeweiligen Brillenreferenzpunkt (120) an einem zur jeweils selben Kopfseite korrespondierenden Ohrenbügel des Brillenmodels ausgehenden virtuellen Strahls; und
Anpassen von zumindest einem Parameter der Transformation in Abhängigkeit von der jeweiligen relativen Lage jedes dieser Brillenreferenzpunkte (120) zu dem von ihm ausgehend bestimmten zusätzlichen Kopfreferenzpunkt, um eine bezüglich der linken und der rechten Kopfseite des Kopfmodells (105) gleichbeabstandete Ausrichtung des Brillenmodells (115) als Anpassungsziel zu erreichen.

4. Verfahren (200) nach einem der vorausgehenden Ansprüche, wobei zumindest einer der Platzierungsschritte des Anpassungsprozesses zum Ermitteln der Transformation für diesen Platzierungsschritt einen oder mehrere der folgenden Teilprozesse, insbesondere gemäß der folgenden Reihenfolge, aufweist:
(a) Anpassen von zumindest einem Parameter der Transformation in Abhängigkeit von der relativen Lage eines Kopfreferenzpunkts an einem Ohr des Kopfmodels zu einem korrespondierenden Brillenreferenzpunkt (120) des Brillenmodels, um als Anpassungsziel eine Platzierung des Brillenmodells (115) am Kopfmodell (105) zu erreichen, bei welcher der Ohrenbügel auf der Ohrwurzel des Ohrs aufliegt;
(b) Bestimmen von je zumindest einem zusätzlichen Kopfreferenzpunkt auf der Nase des Kopfmodells (105) mittels Raycasting in einer zumindest anteilig parallel zur anatomischen Horizontalachse des Kopfmodells (105) verlaufenden Richtung anhand eines von einem jeweiligen Brillenreferenzpunkt (120) an einem zur zumindest abschnittsweisen Umfassung der Nasenflügel einer Nase des Kopfmodells (105) konfigurierten Nasenbereich des Brillenmodels ausgehenden virtuellen Strahls; und
Anpassen von zumindest einem Parameter der Transformation in Abhängigkeit von der jeweiligen relativen Lage jedes dieser Brillenreferenzpunkte (120) zu dem von ihm ausgehend bestimmten zusätzlichen Kopfreferenzpunkt, um als Anpassungsziel eine Zentrierung des Nasenbereichs des Brillenmodells (115) am Kopfmodell (105) bezüglich der parallel zur anatomischen Horizontalachse verlaufenden Richtung zu erreichen;
(c) Bestimmen von je zumindest einem zusätzlichen Kopfreferenzpunkt auf der Nase des Kopfmodells (105) mittels Raycasting in einer zumindest anteilig parallel zur anatomischen Longitudinalachse des Kopfmodells (105) verlaufenden Richtung anhand eines von einem jeweiligen Brillenreferenzpunkt (120) an einem zur zumindest abschnittsweisen Umfassung der Nasenflügel einer Nase des Kopfmodells (105) konfigurierten Nasenbereich des Brillenmodels ausgehenden virtuellen Strahls; und
Anpassen von zumindest einem Parameter der Transformation in Abhängigkeit von der jeweiligen relativen Lage jedes dieser Brillenreferenzpunkte (120) zu dem von ihm ausgehend bestimmten zusätzlichen Kopfreferenzpunkt, um als Anpassungsziel eine zumindest punktweise Auflage des Nasenbereichs des Brillenmodells (115) an den Nasenflügeln der Nase des Kopfmodell (105) zu erreichen;
(d) Prüfen, ob gemäß der aktuellen Platzierung des Brillenmodells (115) am Kopfmodell (105) eine Kollision des Brillenmodels mit einem Wangenbereich des Kopfmodells (105) vorliegt; und
wenn dies der Fall ist, Anpassen von zumindest einem Parameter der Transformation, um als Anpassungsziel eine Aufhebung der Kollision mit einem Wangenbereich zu erreichen;
(e) Prüfen, ob gemäß der aktuellen Platzierung des Brillenmodells (115) am Kopfmodell (105) eine Kollision des Brillenmodels mit einem Stirn- oder Nasenrückenbereich des Kopfmodells (105) vorliegt; und
wenn dies der Fall ist, Anpassen von zumindest einem Parameter der Transformation, um als Anpassungsziel eine Aufhebung der Kollision mit dem Stirn- bzw. Nasenrückenbereich zu erreichen.

5. Verfahren (200) nach einem der vorausgehenden Ansprüche, des Weiteren aufweisend einen zwischen dem ersten Platzierungsschritt und dem Anpassungsprozess durchgeführten Verschiebungsprozess, bei dem die Brillenreferenzpunkte (120) einer translatorischen Transformation in einer Richtung entlang oder parallel zu einer Nasenrückenlinie des Kopfmodells (105) unterzogen werden, die sich zwischen einem an der Nasenwurzel des Kopfmodells (105) gelegenen Kopfreferenzpunkt und einem auf dem Nasenrücken des Kopfmodells (105) gelegenen Kopfreferenzpunkt erstreckt.

6. Verfahren (200) nach einem der vorausgehenden Ansprüche, des Weiteren aufweisend einen dem Anpassungsprozess nachfolgenden Passformermittlungsprozess, der zumindest einen der folgenden Teilprozesse aufweist:
- Bestimmen, auf Basis der aus dem Anpassungsprozess resultierenden Platzierung des Brillenmodells (115) an dem Kopfmodell (105) und für zumindest einen Ohrenbügel des Brillenmodells (115) , einer jeweiligen Länge eines Ohrenbügelabschnitts, der sich zwischen einem Frontteil des Brillenmodells (115) und dem Auflagepunkt des Ohrenbügels an einem Ohrwurzelpunkt am Kopfmodels erstreckt;
- Abschätzen eines Anpressdrucks eines zu dem Ohrenbügel des Kopfmodells (105) korrespondierenden Ohrenbügels des realen Brillengestells am realen Kopf der Person mittels Berechnung eines virtuellen Anpressdrucks des Ohrenbügels des Brillenmodells (115) am Kopfmodell (105) als Funktion der bestimmten Länge des Ohrenbügelabschnitts und bekannten Elastizitätseigenschaften des realen Ohrenbügels;
- Ermitteln, auf Basis der aus dem Anpassungsprozess resultierenden Platzierung des Brillenmodells (115) an dem Kopfmodell (105) und für zumindest einen mehrere Brillenreferenzpunkte (120) aufweisenden Teilbereich des Brillenmodells (115), welcher Anteil dieser Brillenreferenzpunkte (120) auf dem Kopfmodell (105) aufliegt;
- Ermitteln, auf Basis der aus dem Anpassungsprozess resultierenden Platzierung des Brillenmodells (115) an dem Kopfmodell, für zumindest einen ausgewählten Brillenreferenzpunkt (120) dessen jeweilige relative räumliche Lage bezüglich zumindest eines Punkts, der einem Kopfreferenzpunkt entspricht oder in Abhängigkeit von den jeweiligen Positionen mehrerer Kopfreferenzpunkte (110) bestimmt wird;
- Abschätzen der Güte einer Passform des realen Brillengestells am realen Kopf der Person in Abhängigkeit von dem abgeschätzten Anpressdruck, dem ermittelten Anteil der am Kopfmodell (105) aufliegenden Brillenreferenzpunkte (120) des Teilbereichs, und/oder von einer oder mehreren der ermittelten relativen räumlichen Lagen;
- Ermitteln einer Bewertung der Passform anhand eines Vergleichs der abgeschätzten Güte der Passform mit dazu korrespondierenden Referenzdaten;
- Ausgeben der ermittelten Güte und/oder Bewertung der Passform als Bestandteil der Vorhersageinformationen,
wobei das Verfahren des Weiteren vorzugsweise einen Maßparameterermittlungsprozess aufweist, bei dem in Abhängigkeit von zumindest einem Ergebnis des Passformermittlungsprozesses einer oder mehrere Maßparameter einer gegenüber der durch die Brillenmodelldaten repräsentierten Gestellgeometrie abgeänderten Gestellgeometrie des Brillengestelles als Inputdaten für eine in Abhängigkeit von den Inputdaten gesteuerte Fertigung eines realen Brillengestells erzeugt werden.

7. Verfahren (200) nach einem der vorausgehenden Ansprüche, wobei die jeweilige Lage zumindest eines der initialen Kopfreferenzpunkte (110) so definiert wird, dass der jeweilige initiale Kopfreferenzpunkt an einer ausgewählten Körperregion des Kopfmodells (105) liegt, die zuvor mittels algorithmischer Gesichtserkennung auf Basis der Kopfmodelldaten oder zumindest eines bildsensorisch erfassten Abbilds des Gesichts der realen Person ausgewählt wurde.

8. Verfahren (200) nach einem der vorausgehenden Ansprüche, wobei zumindest einer der initialen Kopfreferenzpunkte (110) am Kopfmodell (105) so definiert wird, dass er an einer der folgenden Körperregionen des Kopfmodells (105) liegt: Auge, Augenbraue, Nase, Schläfenbein, Ohr.

9. Verfahren (200) nach einem der vorausgehenden Ansprüche, wobei die jeweilige Lage zumindest eines der initialen Brillenreferenzpunkte (120) so vordefiniert ist oder wird, dass der jeweilige initiale Brillenreferenzpunkt (120) an einem der folgenden Bereiche des Brillenmodells (115) liegt: einer Kante am unteren oder oberen Rahmen eines Frontteils, einem Nasenbereich, einem Frontbackenbereich, einem Ohrenbügel,
wobei in zumindest einem der Bereiche des Brillenmodells (115) jeweils eine Menge aus zumindest drei Brillenreferenzpunkten vorzugsweise so vordefiniert ist oder wird, dass zumindest einer der Brillenreferenzpunkte (120) der Menge bezüglich zwei der anderen Brillenreferenzpunkte (120) der Menge denselben Abstand aufweist,
wobei an zumindest einer der Kanten des Brillenmodells (115) vorzugsweise zumindest jeweils sechs Brillenreferenzpunkte (120) vordefiniert sind oder werden.

10. Verfahren (200) nach einem der vorausgehenden Ansprüche, wobei das Kopfmodell (105) so erfasst wird, dass es in den Kopfmodelldaten als ein Polygonnetz oder Menge von Polygonnetzen repräsentiert ist und die Gesamtanzahl der in diesem bzw. diesen Polygonnetzen definierten Knoten zumindest 150.000 beträgt, wobei die Anzahl der initialen Kopfreferenzpunkte (110) vorzugsweise geringer gewählt wird als die Gesamtzahl der Knoten des bzw. der Polygonnetze des Kopfmodells (105).

11. Verfahren (200) nach einem der vorausgehenden Ansprüche, wobei das Brillenmodell (115) so erfasst wird, dass es in den Brillenmodelldaten als ein Polygonnetz oder Menge von Polygonnetzen repräsentiert ist und die Gesamtzahl der in diesem bzw. diesen Polygonnetzen definierten Knoten zumindest 50.000 beträgt, wobei die Anzahl der Brillenreferenzpunkte (120) vorzugsweise geringer gewählt wird als die Gesamtzahl der Knoten des bzw. der Polygonnetze des Brillenmodells (115).

12. Verfahren (200) nach einem der vorausgehenden Ansprüche, wobei zur Ermittlung der initialen Kopfreferenzpunkte (110) eine in den Kopfmodelldaten repräsentierte Texturinformation, welche eine Textur des Kopfes der realen Person repräsentiert, herangezogen wird.

13. Verfahren (200) nach einem der vorausgehenden Ansprüche, wobei im ersten Platzierungsschritt ein Brillenreferenzpunkt, der auf einem Nasensteg des Brillenmodells (115) liegt, auf einen Kopfreferenzpunkt, der an der Nasenwurzel des Kopfmodells (105) liegt zur Deckung gebracht wird und/oder zumindest ein Brillenreferenzpunkt, der auf einem Ohrenbügel des Brillenmodells (115) liegt, mit einem Kopfreferenzpunkt, der an einem Schläfenbein des Kopfmodells (105) liegt, zur Deckung gebracht wird.

14. Verfahren (200) nach einem der vorausgehenden Ansprüche, wobei das Generieren und Ausgeben von Vorhersageinformationen ein Anwenden der durch die einzelnen in den vorausgegangenen Platzierungsschritten festgelegten Transformationen definierten Gesamttransformation auf das gesamte Brillenmodel aufweist, um das Brillenmodell (115) insgesamt gemäß dem Ergebnis des Anpassungsprozesses am Kopfmodell (105) virtuell zu platzieren.

15. Verfahren (200) nach einem der vorausgehenden Ansprüche, wobei im Anpassungsprozess zumindest bei einem Raycasting dieses Raycasting entlang einer virtuellen Richtung ausgeführt wird, die orthogonal zur lokalen Flächennormale der Oberfläche des Brillenmodells (115) am jeweiligen Brillenreferenzpunkt (120) verläuft, von dem das Raycasting ausgeht.

16. Vorrichtung, insbesondere Datenverarbeitungsvorrichtung, die Mittel zur Ausführung des Verfahrens nach einem der vorausgehenden Ansprüche aufweist.

17. Computerprogramm oder nicht-flüchtiges computerlesbares Speichermedium, mit Anweisungen, die bei ihrer Ausführung auf einem Computer oder einer Multi-Computer-Plattform bewirken, dass dieser bzw. diese das Verfahren (200) nach einem der Ansprüche 1 bis 15 ausführt.

## Claims

1. A method (200) for virtually predicting a real seat of a real eyeglasses frame of a specific frame geometry on the head of a person with an individual head geometry, the method (200) comprising:
obtaining head model data representing a three-dimensional virtual head model (105) of at least a part of the head of the person;
obtaining eyeglasses model data representing a three-dimensional virtual eyeglasses model (115) of at least a part of the frame geometry of the eyeglasses frame;
a first placement step in which a point set of a plurality of eyeglasses reference points on the eyeglasses model (115) predefined by or on the basis of the eyeglasses model data is aligned relative to a point set of one or more initial head reference points on the head model (105) predefined by or on the basis of the head model data in order to define an initial virtual placement of the eyeglasses model (115) on the head model (105);
an adaptation process with one or more further placement steps carried out iteratively following the first placement step, in which one or more additional head reference points (140) on the head model (105) are determined in each case by means of ray casting on the basis of a respective virtual beam emanating from one or more of the eyeglasses reference points (120) and are used to determine at least one parameter value of a parameterized translational and/or rotational transformation of the eyeglasses reference points (120) for adapting the virtual placement of the eyeglasses reference points (120) relative to the head model and the correspondingly defined transformation is carried out with respect to the eyeglasses reference points (120); and
generating and outputting prediction information which represents a prediction of the real seat of the real eyeglasses frame on the head of the person on the basis of the virtual placement of the eyeglasses reference points (120) relative to the head reference points resulting within the scope of the iteration from the transformation of the most recently carried out placement step.

2. The method (200) according to claim 1, wherein:
the determination of the transformation for the respective current placement step comprises an adaptation of at least one parameter of the transformation depending on the relative position of at least one of the eyeglasses reference points (120) to at least one of the additional head reference points (140) determined in the current placement step in order to achieve an adaptation goal defined with respect to this position.

3. The method (200) according to claim 2, wherein the first placement step or at least one of the placement steps of the adaptation process further comprises:
determining in each case at least one additional head reference point (140) on the head model (105) per head side by means of ray casting on the basis of a virtual beam emanating from a respective eyeglasses reference point (120) on an ear temple of the eyeglasses model corresponding to the respective same head side; and
adapting at least one parameter of the transformation depending on the respective relative position of each of these eyeglasses reference points (120) to the additional head reference point determined emanating therefrom in order to achieve an alignment of the eyeglasses model (115) equidistant with respect to the left and the right head side of the head model (105) as an adaptation goal.

4. The method (200) according to one of the preceding claims, wherein at least one of the placement steps of the adaptation process for determining the transformation for this placement step comprises one or more of the following sub-processes, in particular according to the following order:
(a) adapting at least one parameter of the transformation depending on the relative position of a head reference point on an ear of the head model to a corresponding eyeglasses reference point (120) of the eyeglasses model in order to achieve, as an adaptation goal, a placement of the eyeglasses model (115) on the head model (105) in which the ear temple rests on the ear root of the ear;
(b) determining in each case at least one additional head reference point on the nose of the head model (105) by means of ray casting in a direction running at least partially parallel to the anatomical horizontal axis of the head model (105) on the basis of a virtual beam emanating from a respective eyeglasses reference point (120) on a nose region of the eyeglasses model configured to at least partially enclose the nasal lobes of a nose of the head model (105); and
adapting at least one parameter of the transformation depending on the respective relative position of each of these eyeglasses reference points (120) to the additional head reference point determined emanating therefrom in order to achieve, as an adaptation goal, a centering of the nose region of the eyeglasses model (115) on the head model (105) with respect to the direction running parallel to the anatomical horizontal axis;
(c) determining in each case at least one additional head reference point on the nose of the head model (105) by means of ray casting in a direction running at least partially parallel to the anatomical longitudinal axis of the head model (105) on the basis of a virtual beam emanating from a respective eyeglasses reference point (120) on a nose region of the eyeglasses model configured to at least partially enclose the nasal lobes of a nose of the head model (105); and
adapting at least one parameter of the transformation depending on the respective relative position of each of these eyeglasses reference points (120) to the additional head reference point determined emanating therefrom in order to achieve, as an adaptation goal, an at least pointwise support of the nose region of the eyeglasses model (115) on the nasal lobes of the nose of the head model (105);
(d) checking whether, according to the current placement of the eyeglasses model (115) on the head model (105), there is a collision of the eyeglasses model with a cheek region of the head model (105); and
if this is the case, adapting at least one parameter of the transformation in order to achieve, as an adaptation goal, a cancellation of the collision with a cheek region;
(e) checking whether, according to the current placement of the eyeglasses model (115) on the head model (105), there is a collision of the eyeglasses model with a forehead or nose bridge region of the head model (105); and if this is the case, adapting at least one parameter of the transformation in order to achieve, as an adaptation goal, a cancellation of the collision with the forehead or nose bridge region.

5. The method (200) according to one of the preceding claims, further comprising a displacement process carried out between the first placement step and the adaptation process, in which the eyeglasses reference points (120) are subjected to a translational transformation in a direction along or parallel to a nose bridge line of the head model (105), which extends between a head reference point located at the nose root of the head model (105) and a head reference point located on the nose bridge of the head model (105).

6. The method (200) according to one of the preceding claims, further comprising a fit determination process following the adaptation process, which comprises at least one of the following sub-processes:
- determining, on the basis of the placement of the eyeglasses model (115) on the head model (105) resulting from the adaptation process and for at least one ear temple of the eyeglasses model (115), a respective length of an ear temple portion, which extends between a front part of the eyeglasses model (115) and the support point of the ear temple on an ear root point on the head model;
- estimating a contact pressure of an ear temple of the real eyeglasses frame corresponding to the ear temple of the head model (105) on the real head of the person by means of calculating a virtual contact pressure of the ear temple of the eyeglasses model (115) on the head model (105) as a function of the determined length of the ear temple portion and known elasticity properties of the real ear temple;
- determining, on the basis of the placement of the eyeglasses model (115) on the head model (105) resulting from the adaptation process and for at least one sub-region of the eyeglasses model (115) comprising a plurality of eyeglasses reference points (120), which portion of these eyeglasses reference points (120) rests on the head model (105);
- determining, on the basis of the placement of the eyeglasses model (115) on the head model resulting from the adaptation process, for at least one selected eyeglasses reference point (120), the respective relative spatial position thereof with respect to at least one point which corresponds to a head reference point or is determined depending on the respective positions of a plurality of head reference points (110);
- estimating the quality of a fit of the real eyeglasses frame on the real head of the person depending on the estimated contact pressure, the determined portion of the eyeglasses reference points (120) of the sub-region resting on the head model (105), and/or on one or more of the determined relative spatial positions;
- determining an evaluation of the fit on the basis of a comparison of the estimated quality of the fit with reference data corresponding thereto;
- outputting the determined quality and/or evaluation of the fit as a component of the prediction information,
wherein the method further preferably comprises a measurement parameter determination process in which, depending on at least one result of the fit determination process, one or more measurement parameters of a frame geometry of the eyeglasses frame modified with respect to the frame geometry represented by the eyeglasses model data are generated as input data for a production of a real eyeglasses frame controlled depending on the input data.

7. The method (200) according to one of the preceding claims, wherein the respective position of at least one of the initial head reference points (110) is defined such that the respective initial head reference point lies at a selected body region of the head model (105) which was previously selected by means of algorithmic face recognition on the basis of the head model data or at least one image of the face of the real person obtained by image sensor.

8. The method (200) according to one of the preceding claims, wherein at least one of the initial head reference points (110) on the head model (105) is defined such that it lies at one of the following body regions of the head model (105): eye, eyebrow, nose, temporal bone, ear.

9. The method (200) according to one of the preceding claims, wherein the respective position of at least one of the initial eyeglasses reference points (120) is or is predefined such that the respective initial eyeglasses reference point (120) lies at one of the following regions of the eyeglasses model (115): an edge on the lower or upper frame of a front part, a nose region, a front cheek region, an ear temple,
wherein in at least one of the regions of the eyeglasses model (115) in each case a set of at least three eyeglasses reference points is or is preferably predefined such that at least one of the eyeglasses reference points (120) of the set has the same distance with respect to two of the other eyeglasses reference points (120) of the set,
wherein at least in each case six eyeglasses reference points (120) are or are preferably predefined at at least one of the edges of the eyeglasses model (115).

10. The method (200) according to one of the preceding claims, wherein the head model (105) is obtained such that it is represented in the head model data as a polygon mesh or set of polygon meshes and the total number of the nodes defined in this or these polygon meshes is at least 150,000, wherein the number of the initial head reference points (110) is preferably selected to be less than the total number of the nodes of the polygon mesh or mesh of the head model (105).

11. The method (200) according to one of the preceding claims, wherein the eyeglasses model (115) is obtained such that it is represented in the eyeglasses model data as a polygon mesh or set of polygon meshes and the total number of the nodes defined in this or these polygon meshes is at least 50,000, wherein the number of the eyeglasses reference points (120) is preferably selected to be less than the total number of the nodes of the polygon mesh or mesh of the eyeglasses model (115).

12. The method (200) according to one of the preceding claims, wherein texture information represented in the head model data which represents a texture of the head of the real person is used to determine the initial head reference points (110).

13. The method (200) according to one of the preceding claims, wherein in the first placement step a eyeglasses reference point which lies on a bridge of the nose of the eyeglasses model (115) is brought to coincide with a head reference point which lies at the nose root of the head model (105) and/or at least one eyeglasses reference point which lies on an ear temple of the eyeglasses model (115) is brought to coincide with a head reference point which lies at a temporal bone of the head model (105).

14. The method (200) according to one of the preceding claims, wherein the generating and outputting of prediction information comprises an application of the overall transformation defined by the individual transformations defined in the preceding placement steps to the entire eyeglasses model in order to virtually place the eyeglasses model (115) overall according to the result of the adaptation process on the head model (105).

15. The method (200) according to one of the preceding claims, wherein in the adaptation process at least during a ray casting this ray casting is carried out along a virtual direction which runs orthogonally to the local surface normal of the surface of the eyeglasses model (115) at the respective eyeglasses reference point (120) from which the ray casting emanates.

16. A device, in particular a data processing device, which comprises means for carrying out the method according to one of the preceding claims.

17. A computer program or a non-transitory computer-readable storage medium, comprising instructions which, when they are executed on a computer or a multi-computer platform, cause said computer or platform to carry out the method (200) according to one of claims 1 to 15.

## Revendications

1. Procédé (200) de prédiction virtuelle d'un siège réel d'une monture de lunettes réelle d'une géométrie de monture déterminée sur la tête d'une personne avec une géométrie de tête individuelle, le procédé (200) comprenant :
l'acquisition de données de modèle de tête représentant un modèle de tête virtuel tridimensionnel (105) d'au moins une partie de la tête de la personne ;
l'acquisition de données de modèle de lunettes représentant un modèle de lunettes virtuel tridimensionnel (115) d'au moins une partie de la géométrie de monture de la monture de lunettes ;
une première étape de placement dans laquelle un ensemble de points d'une pluralité de points de référence de lunettes prédéfinis par ou sur la base des données de modèle de lunettes sur le modèle de lunettes (115) est aligné par rapport à un ensemble de points d'un ou plusieurs points de référence de tête initiaux prédéfinis par ou sur la base des données de modèle de tête sur le modèle de tête (105) pour définir un placement virtuel initial du modèle de lunettes (115) sur le modèle de tête (105) ;
un processus d'adaptation avec une ou plusieurs autres étapes de placement exécutées de manière itérative à la suite de la première étape de placement, dans lesquelles un ou plusieurs points de référence de tête supplémentaires (140) sur le modèle de tête (105) sont respectivement déterminés au moyen d'un raycasting à l'aide d'un rayon virtuel respectif provenant d'un ou plusieurs des points de référence de lunettes (120) et sont utilisés pour déterminer au moins une valeur de paramètre d'une transformation en translation et/ou en rotation paramétrée des points de référence de lunettes (120) pour adapter le placement virtuel des points de référence de lunettes (120) par rapport au modèle de tête et la transformation définie en conséquence est exécutée par rapport aux points de référence de lunettes (120) ; et
la génération et l'émission d'informations de prédiction représentant une prédiction du siège réel de la monture de lunettes réelle sur la tête de la personne sur la base du placement virtuel des points de référence de lunettes (120) par rapport aux points de référence de tête résultant dans le cadre de l'itération de la transformation de la dernière étape de placement exécutée.

2. Procédé (200) selon la revendication 1, dans lequel :
la détermination de la transformation pour l'étape de placement actuelle respective comprend une adaptation d'au moins un paramètre de la transformation en fonction de la position relative d'au moins un des points de référence de lunettes (120) par rapport à au moins un des points de référence de tête supplémentaires (140) déterminés dans l'étape de placement actuelle pour atteindre un objectif d'adaptation défini par rapport à cette position.

3. Procédé (200) selon la revendication 2, dans lequel la première étape de placement ou au moins une des étapes de placement du processus d'adaptation comprend en outre :
la détermination d'au moins un point de référence de tête supplémentaire (140) sur le modèle de tête (105) par côté de tête au moyen d'un raycasting à l'aide d'un rayon virtuel provenant d'un point de référence de lunettes respectif (120) sur une branche d'oreille du modèle de lunettes correspondant au même côté de tête respectif ; et
l'adaptation d'au moins un paramètre de la transformation en fonction de la position relative respective de chacun de ces points de référence de lunettes (120) par rapport au point de référence de tête supplémentaire déterminé à partir de celui-ci pour atteindre une orientation du modèle de lunettes (115) équidistante par rapport aux côtés de tête gauche et droit du modèle de tête (105) en tant qu'objectif d'adaptation.

4. Procédé (200) selon l'une des revendications précédentes, dans lequel au moins une des étapes de placement du processus d'adaptation pour déterminer la transformation pour cette étape de placement comprend un ou plusieurs des processus partiels suivants, en particulier selon l'ordre suivant :
(a) l'adaptation d'au moins un paramètre de la transformation en fonction de la position relative d'un point de référence de tête sur une oreille du modèle de tête par rapport à un point de référence de lunettes correspondant (120) du modèle de lunettes pour atteindre, en tant qu'objectif d'adaptation, un placement du modèle de lunettes (115) sur le modèle de tête (105) dans lequel la branche d'oreille repose sur la racine de l'oreille ;
(b) la détermination d'au moins un point de référence de tête supplémentaire sur le nez du modèle de tête (105) au moyen d'un raycasting dans une direction s'étendant au moins en partie parallèlement à l'axe horizontal anatomique du modèle de tête (105) à l'aide d'un rayon virtuel provenant d'un point de référence de lunettes respectif (120) sur une région nasale du modèle de lunettes configurée pour entourer au moins en partie les ailes nasales d'un nez du modèle de tête (105) ; et
l'adaptation d'au moins un paramètre de la transformation en fonction de la position relative respective de chacun de ces points de référence de lunettes (120) par rapport au point de référence de tête supplémentaire déterminé à partir de celui-ci pour atteindre, en tant qu'objectif d'adaptation, un centrage de la région nasale du modèle de lunettes (115) sur le modèle de tête (105) par rapport à la direction s'étendant parallèlement à l'axe horizontal anatomique ;
(c) la détermination d'au moins un point de référence de tête supplémentaire sur le nez du modèle de tête (105) au moyen d'un raycasting dans une direction s'étendant au moins en partie parallèlement à l'axe longitudinal anatomique du modèle de tête (105) à l'aide d'un rayon virtuel provenant d'un point de référence de lunettes respectif (120) sur une région nasale du modèle de lunettes configurée pour entourer au moins en partie les ailes nasales d'un nez du modèle de tête (105) ; et
l'adaptation d'au moins un paramètre de la transformation en fonction de la position relative respective de chacun de ces points de référence de lunettes (120) par rapport au point de référence de tête supplémentaire déterminé à partir de celui-ci pour atteindre, en tant qu'objectif d'adaptation, un appui au moins ponctuel de la région nasale du modèle de lunettes (115) sur les ailes nasales du nez du modèle de tête (105) ;
(d) le contrôle pour savoir si, selon le placement actuel du modèle de lunettes (115) sur le modèle de tête (105), il existe une collision du modèle de lunettes avec une région de joues du modèle de tête (105) ; et
si tel est le cas, l'adaptation d'au moins un paramètre de la transformation pour atteindre, en tant qu'objectif d'adaptation, une annulation de la collision avec une région de joues ;
(e) le contrôle pour savoir si, selon le placement actuel du modèle de lunettes (115) sur le modèle de tête (105), il existe une collision du modèle de lunettes avec une région de front ou de dos de nez du modèle de tête (105) ; et
si tel est le cas, l'adaptation d'au moins un paramètre de la transformation pour atteindre, en tant qu'objectif d'adaptation, une annulation de la collision avec la région de front ou de dos de nez.

5. Procédé (200) selon l'une des revendications précédentes, comprenant en outre un processus de décalage exécuté entre la première étape de placement et le processus d'adaptation, dans lequel les points de référence de lunettes (120) sont soumis à une transformation en translation dans une direction le long ou parallèlement à une ligne de dos de nez du modèle de tête (105), qui s'étend entre un point de référence de tête situé sur la racine nasale du modèle de tête (105) et un point de référence de tête situé sur le dos de nez du modèle de tête (105).

6. Procédé (200) selon l'une des revendications précédentes, comprenant en outre un processus de détermination d'ajustement suivant le processus d'adaptation, qui comprend au moins un des processus partiels suivants :
- la détermination, sur la base du placement du modèle de lunettes (115) sur le modèle de tête (105) résultant du processus d'adaptation et pour au moins une branche d'oreille du modèle de lunettes (115), d'une longueur respective d'une section de branche d'oreille qui s'étend entre une partie avant du modèle de lunettes (115) et le point d'appui de la branche d'oreille sur un point de racine d'oreille sur le modèle de tête ;
- l'estimation d'une pression d'appui d'une branche d'oreille, correspondant à la branche d'oreille du modèle de tête (105), de la monture de lunettes réelle sur la tête réelle de la personne au moyen du calcul d'une pression d'appui virtuelle de la branche d'oreille du modèle de lunettes (115) sur le modèle de tête (105) en fonction de la longueur déterminée de la section de branche d'oreille et de propriétés d'élasticité connues de la branche d'oreille réelle ;
- la détermination, sur la base du placement du modèle de lunettes (115) sur le modèle de tête (105) résultant du processus d'adaptation et pour au moins une région partielle du modèle de lunettes (115) comprenant plusieurs points de référence de lunettes (120), de quelle partie de ces points de référence de lunettes (120) repose sur le modèle de tête (105) ;
- la détermination, sur la base du placement du modèle de lunettes (115) sur le modèle de tête résultant du processus d'adaptation, pour au moins un point de référence de lunettes sélectionné (120), de sa position spatiale relative respective par rapport à au moins un point qui correspond à un point de référence de tête ou est déterminée en fonction des positions respectives de plusieurs points de référence de tête (110) ;
- l'estimation de la qualité d'un ajustement de la monture de lunettes réelle sur la tête réelle de la personne en fonction de la pression d'appui estimée, de la partie déterminée des points de référence de lunettes (120) de la région partielle reposant sur le modèle de tête (105), et/ou d'une ou plusieurs des positions spatiales relatives déterminées ;
- la détermination d'une évaluation de l'ajustement à l'aide d'une comparaison de la qualité estimée de l'ajustement avec des données de référence correspondant à celui-ci ;
- l'émission de la qualité déterminée et/ou de l'évaluation de l'ajustement en tant que partie des informations de prédiction,
le procédé comprenant en outre de préférence un processus de détermination de paramètres de mesure dans lequel, en fonction d'au moins un résultat du processus de détermination d'ajustement, un ou plusieurs paramètres de mesure d'une géométrie de monture de la monture de lunettes modifiée par rapport à la géométrie de monture représentée par les données de modèle de lunettes sont générés en tant que données d'entrée pour une fabrication d'une monture de lunettes réelle commandée en fonction des données d'entrée.

7. Procédé (200) selon l'une des revendications précédentes, dans lequel la position respective d'au moins un des points de référence de tête initiaux (110) est définie de telle sorte que le point de référence de tête initial respectif se trouve sur une région corporelle sélectionnée du modèle de tête (105) qui a été précédemment sélectionnée au moyen d'une reconnaissance faciale algorithmique sur la base des données de modèle de tête ou d'au moins une image du visage de la personne réelle acquise par capteur d'image.

8. Procédé (200) selon l'une des revendications précédentes, dans lequel au moins un des points de référence de tête initiaux (110) sur le modèle de tête (105) est défini de telle sorte qu'il se trouve sur l'une des régions corporelles suivantes du modèle de tête (105) : oeil, sourcil, nez, temporal, oreille.

9. Procédé (200) selon l'une des revendications précédentes, dans lequel la position respective d'au moins un des points de référence de lunettes initiaux (120) est ou est prédéfinie de telle sorte que le point de référence de lunettes initial respectif (120) se trouve sur l'une des régions suivantes du modèle de lunettes (115) : un bord sur le cadre inférieur ou supérieur d'une partie avant, une région nasale, une région de mâchoire avant, une branche d'oreille,
dans lequel, dans au moins l'une des régions du modèle de lunettes (115), un ensemble d'au moins trois points de référence de lunettes est ou est de préférence prédéfini de telle sorte qu'au moins un des points de référence de lunettes (120) de l'ensemble présente la même distance par rapport à deux des autres points de référence de lunettes (120) de l'ensemble,
dans lequel, sur au moins l'un des bords du modèle de lunettes (115), au moins six points de référence de lunettes respectifs (120) sont ou sont de préférence prédéfinis.

10. Procédé (200) selon l'une des revendications précédentes, dans lequel le modèle de tête (105) est acquis de telle sorte qu'il est représenté dans les données de modèle de tête comme un réseau polygonal ou un ensemble de réseaux polygonaux et le nombre total des noeuds définis dans ce ou ces réseaux polygonaux est d'au moins 150 000, le nombre des points de référence de tête initiaux (110) étant de préférence choisi inférieur au nombre total des noeuds du ou des réseaux polygonaux du modèle de tête (105).

11. Procédé (200) selon l'une des revendications précédentes, dans lequel le modèle de lunettes (115) est acquis de telle sorte qu'il est représenté dans les données de modèle de lunettes comme un réseau polygonal ou un ensemble de réseaux polygonaux et le nombre total des noeuds définis dans ce ou ces réseaux polygonaux est d'au moins 50 000, le nombre des points de référence de lunettes (120) étant de préférence choisi inférieur au nombre total des noeuds du ou des réseaux polygonaux du modèle de lunettes (115).

12. Procédé (200) selon l'une des revendications précédentes, dans lequel une information de texture représentée dans les données de modèle de tête représentant une texture de la tête de la personne réelle est utilisée pour déterminer les points de référence de tête initiaux (110).

13. Procédé (200) selon l'une des revendications précédentes, dans lequel, dans la première étape de placement, un point de référence de lunettes qui se trouve sur un pont nasal du modèle de lunettes (115) est amené en coïncidence avec un point de référence de tête qui se trouve sur la racine nasale du modèle de tête (105) et/ou au moins un point de référence de lunettes qui se trouve sur une branche d'oreille du modèle de lunettes (115) est amené en coïncidence avec un point de référence de tête qui se trouve sur un temporal du modèle de tête (105).

14. Procédé (200) selon l'une des revendications précédentes, dans lequel la génération et l'émission d'informations de prédiction comprend une application de la transformation globale définie par les différentes transformations définies dans les étapes de placement précédentes à l'ensemble du modèle de lunettes pour placer virtuellement le modèle de lunettes (115) dans son ensemble selon le résultat du processus d'adaptation sur le modèle de tête (105).

15. Procédé (200) selon l'une des revendications précédentes, dans lequel, dans le processus d'adaptation, au moins lors d'un raycasting, ce raycasting est exécuté le long d'une direction virtuelle qui s'étend orthogonalement à la normale de surface locale de la surface du modèle de lunettes (115) sur le point de référence de lunettes respectif (120) dont provient le raycasting.

16. Dispositif, en particulier dispositif de traitement de données, qui comprend des moyens pour exécuter le procédé selon l'une des revendications précédentes.

17. Programme informatique ou support de stockage non transitoire lisible par ordinateur, comprenant des instructions qui, lorsqu'elles sont exécutées sur un ordinateur ou une plate-forme multi-ordinateur, amènent celui-ci ou celle-ci à exécuter le procédé (200) selon l'une des revendications 1 à 15.
